(19) Europäisches Patentamt
European Patent Office
Office européen des brevets

(11) **EP 3 757 609 B1**

(12) **EUROPEAN PATENT SPECIFICATION**

(45) Date of publication and mention
of the grant of the patent:
**20.08.2025  Bulletin 2025/34**

(21) Application number: **18913118.8**

(22) Date of filing: **28.09.2018**

(51) International Patent Classification (IPC):
***G01S 13/90*** *(2006.01)*

(52) Cooperative Patent Classification (CPC):
**G01S 13/9023;** G01S 13/9058

(86) International application number:
**PCT/JP2018/036184**

(87) International publication number:
**WO 2019/187236 (03.10.2019 Gazette 2019/40)**

(54) **RADAR IMAGE PROCESSING DEVICE AND RADAR IMAGE PROCESSING METHOD**

RADARBILDVERARBEITUNGSVORRICHTUNG UND RADARBILDVERARBEITUNGSVERFAHREN

DISPOSITIF DE TRAITEMENT D'IMAGES RADAR ET PROCÉDÉ DE TRAITEMENT D'IMAGES DE RADAR

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **30.03.2018  PCT/JP2018/013795**

(43) Date of publication of application:
**30.12.2020  Bulletin 2020/53**

(73) Proprietor: **Mitsubishi Electric Corporation**
**Tokyo 100-8310 (JP)**

(72) Inventors:
• **KATAYAMA, Yumiko**
**Tokyo 100-8310 (JP)**
• **SUWA, Kei**
**Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
WO-A1-2016/125206       WO-A2-00/54006
JP-A- 2007 322 383      JP-A- 2010 175 330
JP-A- 2010 281 584      JP-A- H 095 433
US-A- 6 011 505         US-A1- 2013 069 819
US-B1- 6 424 287

• **ROSSI CRISTIAN ET AL: "High-Resolution InSAR Building Layovers Detection and Exploitation",** IEEE TRANSACTIONS ON GEOSCIENCE AND REMOTE SENSING, IEEE SERVICE CENTER, PISCATAWAY, NJ, US, vol. 53, no. 12, 1 December 2015 (2015-12-01), pages 6457 - 6468, XP011668181, ISSN: 0196-2892, [retrieved on 20150904], DOI: 10.1109/TGRS.2015.2440913
• **DE ZAN F ET AL: "Observations and discussions of TanDEM-X interferogram spectra over rain forest", 2013 IEEE INTERNATIONAL GEOSCIENCE AND REMOTE SENSING SYMPOSIUM - IGARSS, 26 July 2012 (2012-07-26), pages 5554 - 5557, XP055821131, ISSN: 2153-6996, Retrieved from the Internet <URL:https://elib.dlr.de/75615/1/Forest_spectra. pdf> DOI: 10.1109/IGARSS.2012.6352347**
• **GIARDINO GIOSUE ANDREY ET AL: "An approach for improving building height estimation from interferometric SAR data", 2013 IEEE INTERNATIONAL GEOSCIENCE AND REMOTE SENSING SYMPOSIUM - IGARSS, IEEE, 21 July 2013 (2013-07-21), pages 4269 - 4272, XP032557935, ISSN: 2153-6996, [retrieved on 20140124], DOI: 10.1109/IGARSS.2013.6723777**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 757 609 B1

- DUBOIS CLÉMENCE ET AL: "Building detection and building parameter retrieval in InSAR phase images", ISPRS JOURNAL OF PHOTOGRAMMETRY AND REMOTE SENSING, AMSTERDAM [U.A.] : ELSEVIER, AMSTERDAM, NL, vol. 114, 4 March 2016 (2016-03-04), pages 228 - 241, XP029473527, ISSN: 0924-2716, DOI: 10.1016/J.ISPRSJPRS.2016.02.009
- ZHU JUN ET AL: "High-Rise Building Layover Exploitation with Non-Local Frequency Estimation in SAR Interferograms", REMOTE SENSING, vol. 9, no. 6, 10 June 2017 (2017-06-10), pages 579, XP055821070, DOI: 10.3390/rs9060579
- SUKSMONO A B ET AL: "PROGRESSIVE TRANSFORM-BASED PHASE UNWRAPPING UTILIZING A RECURSIVE STRUCTURE", IEICE TRANSACTION ON COMMUNICATION, COMMUNICATIONS SOCIETY, TOKYO, JP, vol. E89B, no. 3, 1 March 2006 (2006-03-01), pages 929 - 936, XP001240963, ISSN: 0916-8516, DOI: 10.1093/IETCOM/E89-B.3.929
- BAMLER R ET AL: "Synthetic aperture radar interferometry", INVERSE PROBLEMS, INSTITUTE OF PHYSICS PUBLISHING, BRISTOL, GB, vol. 14, no. 4, 1 January 1998 (1998-01-01), pages R1 - 54, XP002249346, ISSN: 0266-5611, DOI: 10.1088/0266-5611/14/4/001
- XIANG, Z. ET AL.: "A new DEM reconstruction method based on an accurate flattening algorithm in interferometric SAR", 2008 IEEE INTERNATIONAL CONFERENCE ON ACOUSTICS, SPEECH AND SIGNAL PROCESSING, 2008, pages 1093 - 1096, XP031250746
- BICKEL, D. L.: "A null-steering viewpoint of interferometric SAR, IGARSS 2000. IEEE 2000 International Geoscience and Remote Sensing Symposium", TAKING THE PULSE OF THE PLANET: THE ROLE OF REMOTE SENSING IN MANAGING THE ENVIRONMENT PROCEEDINGS (CAT. NO. 00 CH 37120, July 2000 (2000-07-01), pages 3206 - 3209, XP010506326, ISBN: 0-7803-6359-0

**Description**

TECHNICAL FIELD

The present invention relates to a radar image processing device and a radar image processing method for calculating differences between pixels included in a first radar image and pixels obtained by phase rotation included in a second radar image.

BACKGROUND ART

A tall building or the like may appear as a scatterer in a radar image acquired by a radar device.

The distance from a platform on which the radar device is mounted to a high position of the scatterer is shorter than that from the platform to a low position of the scatterer by the height of the scatterer.

When the distance from a platform to a high position of a scatterer is shorter than that to a low position of the scatterer, layover, which is a phenomenon that a signal reflected at the high position of the scatterer is displaced toward the platform, occurs.

When layover occurs, a signal reflected at a high position of a scatterer is displaced and thus overlaps with another reflected signal present at the position to which the reflected signal is displaced, which may result in presence of a plurality of reflected signals in one pixel in a radar image.

Non-patent Literature 1 mentioned below teaches a radar image processing device that calculate a difference between a pixel included in a first radar image and a pixel included in a second radar image.

By calculating the difference, the radar image processing device can suppress a reflected signal with a phase difference between the phase with respect to a first radio wave receiving point and the phase with respect to a second radio wave receiving point being zero among a plurality of reflected signals present in one pixel.

The first radio wave receiving point refers to the position of a platform when a first radar image is taken, and the second radio wave receiving point refers to the position of the platform when a second radar image is taken.

Non-patent Literature 2 mentioned below presents a technique for the extraction of building layovers. It makes use of the geocoding stage embedded in the InSAR processor. The document shows that building layovers create a regular pattern in the mapping counter, a map describing the number of occurrences of a SAR pixel in the elevation model. Its exploitation yields a generation of a layover map without the use of external supports. According to the document, the integration in the processor with a limited additional computational load and the capability to isolate layover signatures are additional benefits. Layover patches are then individually analyzed toward a better understanding of the complex urban signal return. A spectral estimation framework is employed to assess the slopes superimposed in the patches. Fringe-frequency estimation is involved. A set of simulations made for a nonparametric (fast Fourier transform) and a parametric (multiple signal classification) technique is performed prior to testing on real data. It is demonstrated that in X-band, for a single interferogram, just one layover contributor, when it dominates over the others, can be extracted with a sufficient accuracy.

CITATION LIST

NON-PATENT LITERATURE

Non-patent Literature 1: D. L. Bickel, "A null-steering viewpoint of interferometric SAR," IGARSS2000
Non-patent Literature 2: Cristian Rossi et al.: "High-Resolution InSAR Building Layovers Detection and Exploitation", IEEE Transactions on Geoscience and Remote Sensing, vol. 53, no. 12, 1 December 2015, pages 6457-6468, XP011668181, ISSN: 0196-2892, DOI: 10.1109/TGRS.2015.2440913
Non-patent Literature 3: Francesco de Zan et al.: "Observations and discussions of TanDEM-X interferogram spectra over rain forest", IEEE International Geoscience and Remote Sensing Symposium, 26 July 2012, pages 5554-5557, ISSN: 2153-6996, XP055821131, DOI: 10.1109/IGARSS.2012.6352347, https://elib.dlr.de/75615/1/Forest_spectra.pdf
Non-patent Literature 4: Giosuè Andrey Giardino et al.: "An approach for improving building height estimation from interferometric SAR data", IEEE International Geoscience and Remote Sensing Symposium, 21 July 2013, pages 4269-4272, ISSN: 2153-6996, XP032557935, 001: 10.1109/IGARSS.2013.6723777
Non-patent Literature 5: Clémence Dubois et al.: "Building detection and building parameter retrieval in InSAR phase images", ISPRS Journal of Photogrammetry and Remote Sensing, vol. 114, 4 March 2016, pages 228-241, XP029473527, ISSN: 0924-2716, DOI: 10.1016/J.ISPRSJPRS.2016.02.009

Non-patent Literature 6: Jun Zhu et al.: "High-Rise Building Layover Exploitation with Non-Local Frequency Estimation in SAR Interferograms", Remote Sensing, vol. 9, no. 6, 10 June 2017, page 579, XP055821070, DOI: 10.3390/rs9060579

## SUMMARY OF INVENTION

### TECHNICAL PROBLEM

The radar image processing device of the related art can suppress a reflected signal with a phase difference between the phase with respect to a first radio wave receiving point and the phase with respect to a second radio wave receiving point being zero among a plurality of reflected signals present in one pixel.

As for a reflected signal that is scattered at the same height as the position where a reflected signal that can be suppressed is scattered among a plurality of reflected signals present in one pixel, however, the phase difference between the phase with respect to a first radio wave receiving point and the phase with respect to a second radio wave receiving point is not zero.

There has thus been a problem in that a reflected signal with a phase difference between the phase with respect to a first radio wave receiving point and the phase with respect to a second radio wave receiving point not being zero cannot be suppressed.

The present invention has been made to solve such problems as described above, and an object thereof is to provide a radar image processing device and a radar image processing method capable of also suppressing a reflected signal with the difference between phases with respect to radio wave receiving points different from each other not being zero.

### SOLUTION TO PROBLEM

A radar image processing device according to the present invention includes a phase shift component calculating unit for calculating a phase shift component in a first axis direction on a two-dimensional inclined surface included in the first radar image and the second radar image, the first axis being an axis of the inclined surface inclined with respect to a ground-range direction; a phase calculating unit for calculating a phase on a parallel surface, the parallel surface being a surface parallel to the inclined surface, and at a distance from the inclined surface, with respect to the inclined surface, the phase being dependent on the distance between the inclined surface and the parallel surface, the distance being a parameter set in advance by a user; and a phase difference calculating unit for calculating a phase difference in each of a plurality of reflected signals present in each of pixels included in first and second radar images, the phase difference being a difference between phases with respect to the respective radio wave receiving points from a phase shift component calculated by the phase shift component calculating unit and a phase calculated by the phase calculating unit; a rotation amount calculating unit for calculating each of phase rotation amounts in a plurality of pixels included in the second radar image from each phase difference calculated by the phase difference calculating unit; and a difference calculating unit for rotating phases in a plurality of pixels included in the second radar image on a basis of the respective rotation amounts calculated by the rotation amount calculating unit, and calculating a difference between pixel values of pixels being complex numbers at corresponding pixel positions among a plurality of pixels included in the first radar image and a plurality of pixels resulting from phase rotation included in the second radar image.

### ADVANTAGEOUS EFFECTS OF INVENTION

According to the present invention, a radar image processing device has a configuration including: a phase shift component calculating unit for calculating a phase shift component in a first axis direction on a two-dimensional inclined surface included in the first radar image and the second radar image, the first axis being an axis of the inclined surface inclined with respect to a ground-range direction; a phase calculating unit for calculating a phase on a surface parallel to the inclined surface with respect to the inclined surface; and a phase difference calculating unit for calculating a phase difference in each of a plurality of reflected signals present in each of pixels included in first and second radar images, the phase difference being a difference between phases with respect to the respective radio wave receiving points from a phase shift component calculated by the phase shift component calculating unit and a phase calculated by the phase calculating unit; a rotation amount calculating unit for calculating each of phase rotation amounts in a plurality of pixels included in the second radar image from each phase difference calculated by the phase difference calculating unit; and a difference calculating unit for rotating phases in a plurality of pixels included in the second radar image on a basis of the respective rotation amounts calculated by the rotation amount calculating unit, and calculating a difference between pixel values of pixels being complex numbers at corresponding pixel positions among a plurality of pixels included in the first radar image and a plurality of pixels resulting from phase rotation included in the second radar image.

The radar image processing device according to the present invention is therefore capable of also suppressing a reflected signal from a scatterer with the difference between phases with respect to the radio wave receiving points different from each other not being zero.

BRIEF DESCRIPTION OF DRAWINGS

FIG. 1 is a configuration diagram illustrating a radar image processing device 10 according to a first embodiment.
FIG. 2 is a configuration diagram illustrating a phase processing unit 12 of the radar image processing device 10 according to the first embodiment.
FIG. 3 is a configuration diagram illustrating an image processing unit 13 of the radar image processing device 10 according to the first embodiment.
FIG. 4 is a hardware configuration diagram illustrating hardware of each of the phase processing unit 12 and the image processing unit 13.
FIG. 5 is a hardware configuration diagram of a computer in a case where the phase processing unit 12 and the image processing unit 13 are implemented by software, firmware, or the like.
FIG. 6 is a flowchart illustrating processing of the phase processing unit 12.
FIG. 7 is an explanatory diagram illustrating an inclined surface 51, a parallel surface 52, and imaging parameters.
FIG. 8 is an explanatory diagram illustrating the relation of a spacing $\Delta sl$ of pixels in a slant-range direction, the range Sw of radar images (a first radar image, a second radar image) and the distance sl from a position in the slant-range direction corresponding to the center position of the radar image to the observation area.
FIG. 9 is a flowchart illustrating processing of the image processing unit 13.
FIG. 10 is an explanatory diagram illustrating suppression of reflected signals present in one pixel in a case where the phases in pixels included in the second radar image are not rotated by a phase rotating unit 33.
FIG. 11 is an explanatory diagram illustrating suppression of reflected signals present in one pixel in a case where the phases in pixels included in the second radar image are rotated by the phase rotating unit 33.
FIG. 12 is a configuration diagram illustrating an image processing unit 13 of a radar image processing device 10 according to a second embodiment.
FIG. 13 is a hardware configuration diagram illustrating hardware of each of a phase processing unit 12 and the image processing unit 13.
FIG. 14 is an explanatory diagram illustrating a plurality of reflected signals present in one pixel in a case where only two radar images are included in a radar image group 2.
FIG. 15 is an explanatory diagram illustrating a plurality of reflected signals present in one pixel in a case where two or more radar images are included in a radar image group 2.
FIG. 16 is a configuration diagram illustrating an image processing unit 13 of a radar image processing device 10 according to a third embodiment.
FIG. 17 is a hardware configuration diagram illustrating hardware of each of a phase processing unit 12 and the image processing unit 13.
FIG. 18 is a configuration diagram illustrating an image processing unit 13 of a radar image processing device 10 according to a fourth embodiment.
FIG. 19 is a hardware configuration diagram illustrating hardware of each of a phase processing unit 12 and the image processing unit 13.
FIG. 20 is a configuration diagram illustrating an image processing unit 13 of a radar image processing device 10 according to a fifth embodiment.
FIG. 21 is a hardware configuration diagram illustrating hardware of each of a phase processing unit 12 and the image processing unit 13.

DESCRIPTION OF EMBODIMENTS

Embodiments for carrying out the invention will now be described with reference to the accompanying drawings for more detailed explanation of the invention.

First Embodiment.

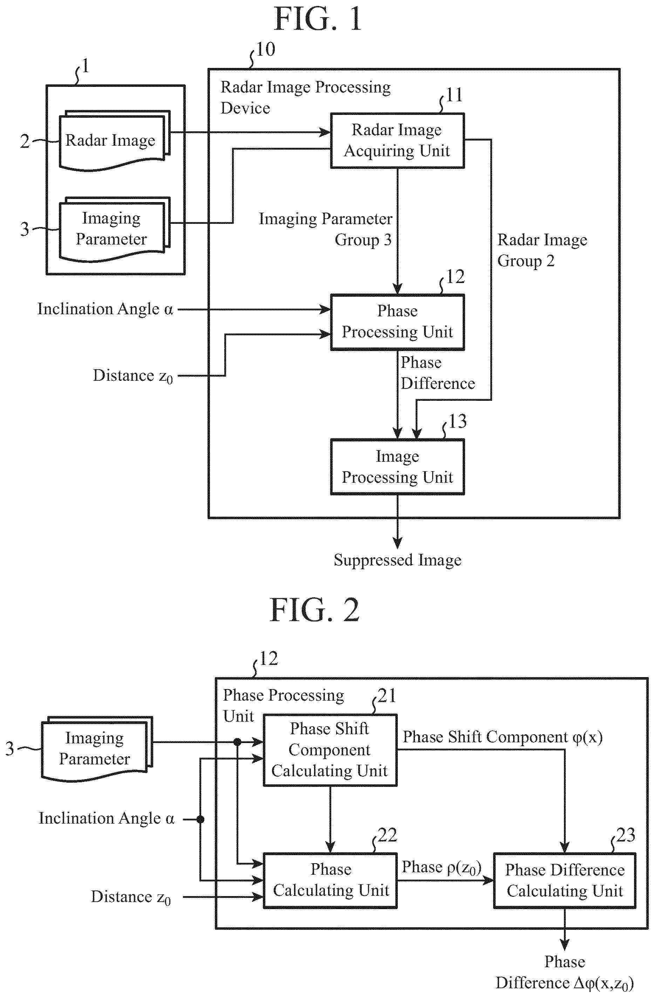

FIG. 1 is a configuration diagram illustrating a radar image processing device 10 according to a first embodiment.
In FIG. 1, a radar 1 is a synthetic aperture radar (SAR), a real aperture radar, or the like, and is mounted on a platform for observing the Earth, etc. The radar 1 takes a radar image, and acquires parameters when taking the radar image. The platform can be a satellite, an aircraft, or the like.

The radar 1 images an observation area from a radio wave receiving point, and then images the observation area again when the platform is at a radio wave receiving point near the aforementioned radio wave receiving point.

In a case of repeat-pass imaging, when the platform is a satellite, the radar 1 images an observation area from a radio wave receiving point, the platform then orbits the Earth, and the radar 1 images the same observation area again to acquire a radar image when the platform has returned to a radio wave receiving point near the aforementioned radio wave receiving point. When the platform is an aircraft, the platform is flown to repeatedly pass the same path, and the radar 1 images one observation area when the platform is at substantially the same radio wave receiving points to acquire radar images.

In a case of single-pass imaging, a plurality of radars 1 are mounted on one platform, and the plurality of radars 1 image one observation area from a radio wave receiving point to acquire radar images. In this case, the plurality of the radars 1 are installed at different positions on the platform.

In addition, a plurality of radars 1 having equal imaging parameters such as a wavelength are mounted on different platforms from each other, and each of the plurality of radars 1 image one observation area from a radio wave receiving point to acquire radar images.

Thus, the radars 1 image the same observation area twice from the respective radio wave receiving points, which are different from each other, to acquire two radar images; a first radar image and a second radar image.

Hereinafter, the position of the platform when the first radar image is taken will be referred to as a first radio wave receiving point, and the position of the platform when the second radar image is taken will be referred to as a second radio wave receiving point.

The first radar image and the second radar image have an equal resolution. Thus, the pixel positions of a plurality of pixels included in a first radar image and those of a plurality of pixels included in a second radar image are expressed in the same manner by (pixel,line).

"pixel" is a variable representing the position of a pixel in a slant-range direction in each of a first radar image and a second radar image, and "line" is a variable representing the position of a pixel in an azimuth direction in each of a first radar image and a second radar image.

The radar 1 transmits a radar image group 2 including a first radar image and a second radar image to the radar image processing device 10.

The radar 1 transmits an imaging parameter group 3 including a first imaging parameter associated with the first radar image and a second imaging parameter associated with the second radar image to the radar image processing device 10.

The radar image group 2 is an image group including a first radar image and a second radar image.

The types of polarization used in imaging a first radar image and in imaging a second radar image are not limited, and each of a first radar image and a second radar image may thus be any of a single-polarization radar image, a dual-polarization radar image, and a quad-polarization radar image.

Each of a first radar image and a second radar image is a radar image showing intensity distribution of radio waves emitted by the radar 1, then reflected by an observation area, and received by the radar 1.

A plurality of pixels included in a first radar image and a plurality of pixels included in a second radar image each have a complex pixel value.

A complex pixel value includes information indicating the distance between the radar 1 and a scatterer present in the observation area, and also information indicating phase shift occurring when a radio wave emitted by the radar 1 is reflected by a scatterer. Hereinafter, a "pixel value" has a value of a complex number unless otherwise noted.

An imaging parameter group 3 is a parameter group including a first imaging parameter and a second imaging parameter.

The first imaging parameter includes position information on the orbit of the platform and sensor information when a first radar image is taken by the radar 1.

The second imaging parameter includes position information on the orbit of the platform and sensor information when a second radar image is taken by the radar 1.

The position information on the orbit is information indicating the latitude, the longitude, and the altitude of the platform when a first radar image or a second radar image is taken by the radar 1. Thus, the position information on the orbit is used as information indicating a first radio wave receiving point or a second radio wave receiving point.

The sensor information includes information indicating an off-nadir angle $\theta$ of the radar 1 when a first radar image or a second radar image is taken, information indicating a wavelength $\lambda$ of a radio wave emitted from the radar 1, and information indicating an average R of distances from the radar 1 to an observation area.

The radar image processing device 10 includes a radar image acquiring unit 11, a phase processing unit 12, and an image processing unit 13.

The radar image acquiring unit 11 acquires each of a radar image group 2 and an imaging parameter group 3 transmitted from the radar 1.

The radar image acquiring unit 11 outputs the radar image group 2 to the image processing unit 13, and outputs the imaging parameter group 3 to the phase processing unit 12.

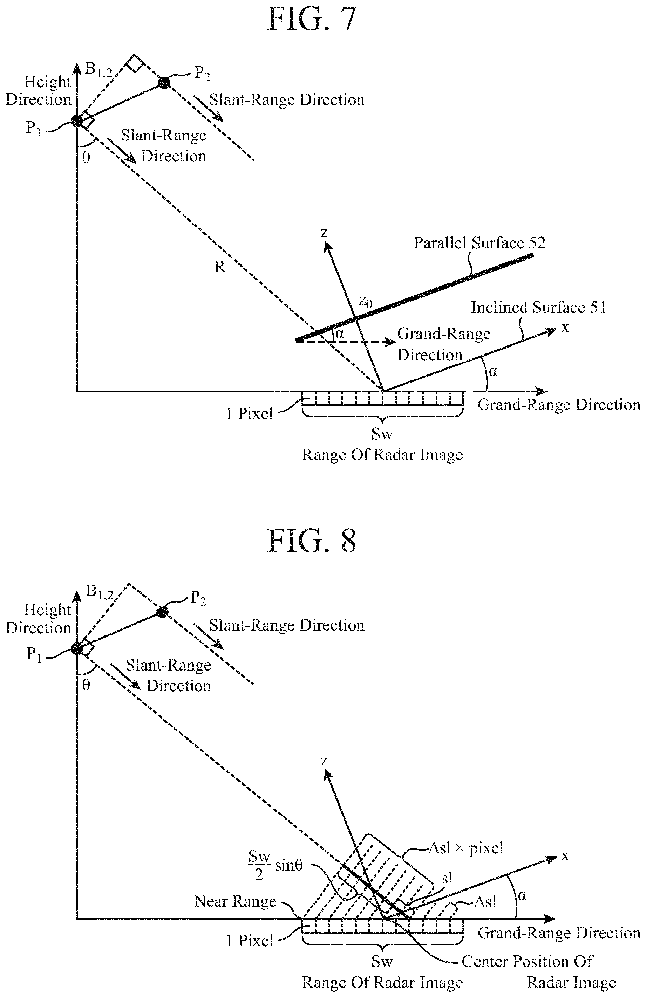

The phase processing unit 12 acquires the imaging parameter group 3 output from the radar image acquiring unit 11, and the inclination angle $\alpha$ of a two-dimensional inclined surface 51 with respect to a ground-range direction (see FIG. 7).

The phase processing unit 12 also acquires the distance $z_0$ between the inclined surface 51 and a parallel surface 52 that is a surface parallel to the inclined surface 51 (see FIG. 7).

Details of the inclined surface 51 and the parallel surface 52 will be described later.

The phase processing unit 12 performs a process of calculating a phase shift component $\varphi(x)$ in an x-axis (first axis) direction on the inclined surface 51 by using the first imaging parameter, the second imaging parameter, and the inclination angle $\alpha$.

The phase processing unit 12 performs a process of calculating a phase $\rho(z_0)$ on the parallel surface 52 with respect to the inclined surface 51 by using the first imaging parameter, the second imaging parameter, the inclination angle $\alpha$, and the distance $z_0$.

The phase processing unit 12 performs a process of calculating, in each of a plurality of reflected signals present in each of pixels included in the first and second radar images, a phase difference $\Delta\varphi(x,z_0)$ between the phase with respect to the first radio wave receiving point and the phase with respect to the second radio wave receiving point.

The image processing unit 13 acquires the radar image group 2 output from the radar image acquiring unit 11, and each phase difference $\Delta\varphi(x,z_0)$ output from the phase processing unit 12.

The image processing unit 13 performs a process of calculating each of phase rotation amounts $\exp[j\cdot\Delta\varphi(x,z_0)]$ in a plurality of pixels included in the second radar image from each phase difference $\Delta\varphi(x,z_0)$ output from the phase processing unit 12.

The image processing unit 13 performs a process of rotating the phases in the plurality of pixels included in the second radar image on the basis of the respective calculated rotation amounts $\exp[j\cdot\Delta\varphi(x,z_0)]$.

The image processing unit 13 performs a process of calculating a difference between pixel values of pixels at corresponding pixel positions among a plurality of pixels included in the first radar image and among a plurality of pixels obtained by phase rotation included in the second radar image.

FIG. 2 is a configuration diagram illustrating the phase processing unit 12 of the radar image processing device 10 according to the first embodiment.

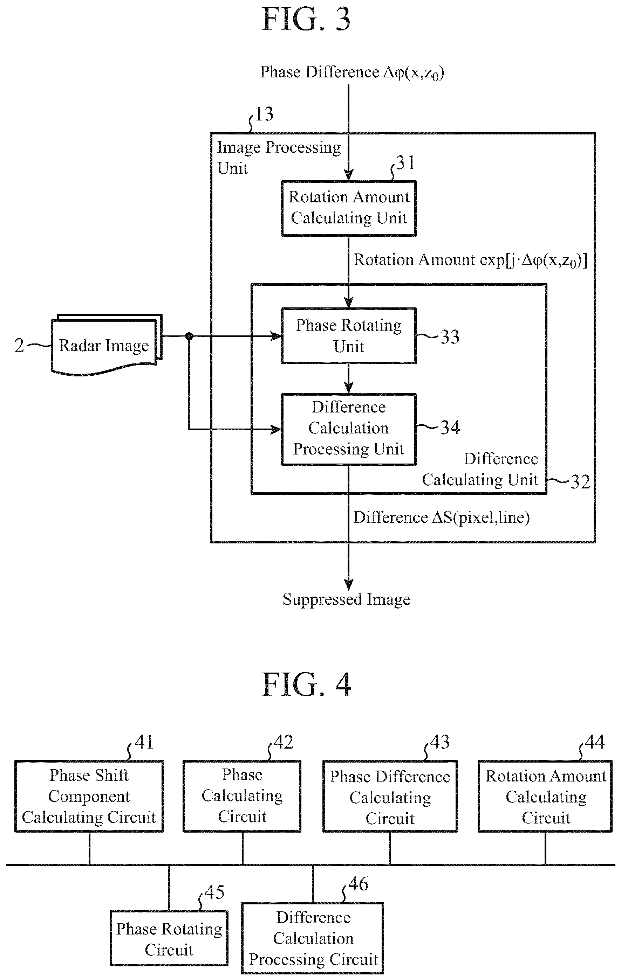

FIG. 3 is a configuration diagram illustrating the image processing unit 13 of the radar image processing device 10 according to the first embodiment.

FIG. 4 is a hardware configuration diagram illustrating hardware of each of the phase processing unit 12 and the image processing unit 13.

In FIG. 2, a phase shift component calculating unit 21 is implemented by a phase shift component calculating circuit 41 illustrated in FIG. 4, for example.

The phase shift component calculating unit 21 acquires the imaging parameter group 3 output from the radar image acquiring unit 11, and the inclination angle $\alpha$.

The phase shift component calculating unit 21 performs the process of calculating the phase shift component $\varphi(x)$ in the x-axis direction on the inclined surface 51 by using the first imaging parameter, the second imaging parameter, and the inclination angle $\alpha$.

The phase shift component calculating unit 21 outputs the phase shift component $\varphi(x)$ in the x-axis direction to a phase difference calculating unit 23.

A phase calculating unit 22 is implemented by a phase calculating circuit 42 illustrated in FIG. 4, for example.

The phase calculating unit 22 acquires the imaging parameter group 3 output from the radar image acquiring unit 11, the inclination angle $\alpha$, and the distance $z_0$.

The phase calculating unit 22 performs the process of calculating the phase $\rho(z_0)$ on the parallel surface 52 with respect to the inclined surface 51 by using the first imaging parameter, the second imaging parameter, the inclination angle $\alpha$, and the distance $z_0$.

The phase calculating unit 22 outputs the phase $\rho(z_0)$ to the phase difference calculating unit 23.

The phase difference calculating unit 23 is implemented by a phase difference calculating circuit 43 illustrated in FIG. 4, for example.

The phase difference calculating unit 23 performs the process of calculating, in each of a plurality of reflected signals present in each of pixels included in the first and second radar images, the phase difference $\Delta\varphi(x,z_0)$ from the phase shift component $\varphi(x)$ and the phase $\rho(z_0)$.

The phase difference $\Delta\varphi(x,z_0)$ is a phase difference in each of the reflected signals, between the phase of the reflected signal with respect to the first radio wave receiving point and the phase of the reflected signal with respect to the second radio wave receiving point.

The phase difference calculating unit 23 outputs each phase difference $\Delta\varphi(x,z_0)$ to the image processing unit 13.

In FIG. 3, a rotation amount calculating unit 31 is implemented by a rotation amount calculating circuit 44 illustrated in FIG. 4, for example.

The rotation amount calculating unit 31 performs the process of calculating each of phase rotation amounts exp $[j \cdot \Delta\varphi(x,z_0)]$ in a plurality of pixels included in the second radar image from each phase difference $\Delta\varphi(x,z_0)$ output from the phase difference calculating unit 23.

The rotation amount calculating unit 31 outputs each rotation amount exp$[j \cdot \Delta\varphi(x,z_0)]$ to a phase rotating unit 33.

A difference calculating unit 32 includes the phase rotating unit 33 and a difference calculation processing unit 34.

The phase rotating unit 33 is implemented by a phase rotating circuit 45 illustrated in FIG. 4, for example.

The phase rotating unit 33 acquires the second radar image from the radar image group 2 output from the radar image acquiring unit 11.

The phase rotating unit 33 performs the process rotating the phases in the plurality of pixels included in the second radar image on the basis of the respective rotation amounts exp$[j \cdot \Delta\varphi(x,z_0)]$ output from the rotation amount calculating unit 31.

The phase rotating unit 33 outputs a second radar image including a plurality of pixels obtained by phase rotation to the difference calculation processing unit 34.

The difference calculation processing unit 34 is implemented by a difference calculation processing circuit 46 illustrated in FIG. 4, for example.

The difference calculation processing unit 34 acquires the first radar image from the radar image group 2 output from the radar image acquiring unit 11, and acquires the second radar image output from the phase rotating unit 33.

The difference calculation processing unit 34 performs the process of calculating a difference $\Delta S(pixel,line)$ between pixel values of pixels at corresponding pixel positions among a plurality of pixels included in the first radar image and among a plurality of pixels obtained by phase rotation included in the second radar image.

The difference $\Delta S(pixel,line)$ corresponds to a pixel of a suppressed image in which unnecessary reflected signals from the scatterer are suppressed.

The difference calculation processing unit 34 outputs the suppressed image including the respective differences $\Delta s$ (pixel, line) to the outside of the unit.

In FIG. 2, it is assumed that each of the phase shift component calculating unit 21, the phase calculating unit 22, and the phase difference calculating unit 23, which are components of the phase processing unit 12, is implemented by such dedicated hardware as illustrated in FIG. 4.

In addition, in FIG. 3, it is assumed that each of the rotation amount calculating unit 31, the phase rotating unit 33, and the difference calculation processing unit 34, which are components of the image processing unit 13, is implemented by such dedicated hardware as illustrated in FIG. 4.

Specifically, the phase processing unit 12 and the image processing unit 13 are assumed to be implemented by the phase shift component calculating circuit 41, the phase calculating circuit 42, the phase difference calculating circuit 43, the rotation amount calculating circuit 44, the phase rotating circuit 45, and the difference calculation processing circuit 46.

Note that each of the phase shift component calculating circuit 41, the phase calculating circuit 42, the phase difference calculating circuit 43, the rotation amount calculating circuit 44, the phase rotating circuit 45, and the difference calculation processing circuit 46 may be a single circuit, a composite circuit, a programmed processor, a parallel-programmed processor, an application specific integrated circuit (ASIC), a field-programmable gate array (FPGA), or a combination thereof, for example.

The components of the phase processing unit 12 and the components of the image processing unit 13 are not limited to those implemented by dedicated hardware. The phase processing unit 12 and the image processing unit 13 may be implemented by software, firmware, or a combination of software and firmware.

The software or firmware is stored in a memory of a computer in the form of programs. The computer refers to hardware for executing programs, and may be a central processing unit (CPU), a central processor, a processing unit, a computing unit, a microprocessor, a microcomputer, a processor, or a digital signal processor (DSP), for example.

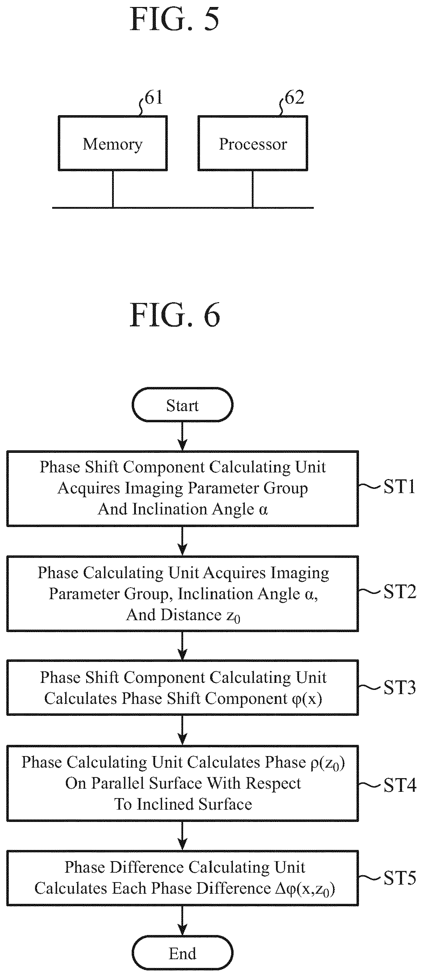

FIG. 5 is a hardware configuration diagram of a computer in a case where the phase processing unit 12 and the image processing unit 13 are implemented by software, firmware, or the like.

In the case where the phase processing unit 12 is implemented by software, firmware, or the like, programs for causing a computer to perform procedures of the phase shift component calculating unit 21, the phase calculating unit 22, and the phase difference calculating unit 23 are stored in a memory 61.

In addition, in the case where the image processing unit 13 is implemented by software, firmware, or the like, programs for causing a computer to perform procedures of the rotation amount calculating unit 31, the phase rotating unit 33, and the difference calculation processing unit 34 are stored in the memory 61.

A processor 62 of the computer thus executes the programs stored in the memory 61.

In addition, FIG. 4 illustrates an example in which each of the components of the phase processing unit 12 and the components of the image processing unit 13 is implemented by dedicated hardware, and FIG. 5 illustrates an example in

8

which the phase processing unit 12 and the image processing unit 13 are implemented by software, firmware, or the like.

The implementations are not limited to the above, and some components of the phase processing unit 12 and some components of the image processing unit 13 may be implemented by dedicated hardware and others may be implemented by software, firmware, and the like, for example.

Next, the operation of the radar image processing device 10 illustrated in FIG. 1 will be explained.

The radar 1 transmits a radar image group 2 including a first radar image and a second radar image, and an imaging parameter group 3 including a first imaging parameter and a second imaging parameter to the radar image processing device 10.

The radar image acquiring unit 11 acquires each of the radar image group 2 and the imaging parameter group 3 transmitted from the radar 1.

The radar image acquiring unit 11 outputs the radar image group 2 to the image processing unit 13, and outputs the imaging parameter group 3 to the phase processing unit 12.

The pixel values of the pixels included in radar images (the first radar image, the second radar image) are complex numbers that are expressed as in the following formula (1).

$$S(pixel, line) = Av(pixel, line) \exp[j\Psi(pixel, line)] \qquad (1)$$

In the formula (1), Av(pixel,line) represents the amplitude of a pixel at a pixel position (pixel,line).

$\Psi$(pixel,line) represents the phase (argument) of a pixel at a pixel position (pixel,line).

j is a symbol representing an imaginary unit.

The phase processing unit 12 performs a process of calculating a phase difference $\Delta\varphi(x,z_0)$.

FIG. 6 is a flowchart illustrating the processing of the phase processing unit 12.

The processing of the phase processing unit 12 will now be explained in detail with reference to FIG. 6.

The phase shift component calculating unit 21 acquires the imaging parameter group 3 output from the radar image acquiring unit 11, and the inclination angle $\alpha$ (step ST1 in FIG. 6).

The phase calculating unit 22 acquires the imaging parameter group 3 output from the radar image acquiring unit 11, the inclination angle $\alpha$, and the distance $z_0$ (step ST2 in FIG. 6).

The inclination angle $\alpha$ is a parameter set in advance by a user, and expressed as in FIG. 7, for example.

The distance $z_0$ is a parameter set in advance by a user, and expressed as in FIG. 7, for example.

Each of the inclination angle $\alpha$ and the distance $z_0$ may be provided to the phase calculating unit 22 by manual operation made by a user, or may be provided to the phase calculating unit 22 from an external device, which is not illustrated, for example.

FIG. 7 is an explanatory diagram illustrating the inclined surface 51, the parallel surface 52, and the imaging parameters.

In FIG. 7, the inclined surface 51 is a two-dimensional surface included in common in the first radar image and the second radar image.

The direction of the x axis, which is the first axis, of the inclined surface 51 is a direction inclined by the inclination angle $\alpha$ with respect to the ground-range direction, and the direction of a second axis of the inclined surface 51 is the azimuth direction (the depth direction from the sheet surface of FIG. 7).

The parallel surface 52 is a surface parallel to the inclined surface 51 and at a distance of $z_0$ from the inclined surface 51.

In a case where the inclined surface 51 is a flat roof of a building built vertically on a horizontal ground surface, for example, the inclination angle $\alpha$ is set to 0 degrees.

In a case where the inclined surface 51 is a wall surface of a building built vertically on a horizontal ground surface, for example, inclination angle $\alpha$ is set to 90 degrees.

$P_1$ represents the first radio wave receiving point, and $P_2$ represents the second radio wave receiving point.

The first radio wave receiving point $P_1$ is a center position on the orbit of the platform when the first radar image is taken, and the second radio wave receiving point $P_2$ is a center position on the orbit of the platform when the second radar image is taken.

$B_{1,2}$ represents a distance component, in a direction perpendicular to the direction (hereinafter referred to as a "slant-range direction") of a radio wave emitted by the radar 1, of the distance between the first radio wave receiving point $P_1$ and the second radio wave receiving point $P_2$.

$\theta$ is an off-nadir angle, which is an angle between a vertically downward direction from the platform and the slant-range direction.

R represents an average of the distance between the first radio wave receiving point $P_1$ and the observation area and the distance between the second radio wave receiving point $P_2$ and the observation area.

The distance component $B_{1,2}$, the off-nadir angle $\theta$, and the average R of the distances are information included in the imaging parameters.

Sw represents a range of the first radar image and a range of the second radar image that capture an observation object.

The range Sw of the first radar image and the range Sw of the second radar image are the same to each other.

Herein, because the distance between the first radio wave receiving point $P_1$ and the observation area and the distance between the second radio wave receiving point $P_2$ and the observation area are long, the phase shift component calculating unit 21 assume that each of the off-nadir angle $\theta$ and the average R of the distances does not change.

Specifically, the off-nadir angle $\theta$ included in the first imaging parameter and the off-nadir angle $\theta$ included in the second imaging parameter are the same value.

In addition, the average R of the distances included in the first imaging parameter and the average R of the distances included in the second imaging parameter are the same value.

In addition, a pixel at a pixel position (pixel,line) among a plurality of pixels included in the first radar image and a pixel at a pixel position (pixel,line) among a plurality of pixels included in the second radar image are pixels at the same pixel position.

FIG. 8 is an explanatory diagram illustrating the relation of a spacing $\Delta sl$ of pixels in the slant-range direction, the range Sw of radar images (the first radar image, the second radar image) and the distance sl from a position in the slant-range direction corresponding to the center position of the radar image to the observation area.

In FIG. 8, the distance from a position in the slant-range direction corresponding to a near range of the radar image to a position in the slant-range direction corresponding to the center position of the radar image is $(Sw/2) \cdot \sin\theta$.

Thus, the distance sl is expressed as in the following formula (2).

$$sl = \Delta sl \times pixel - \frac{Sw}{2}\sin\theta \qquad (2)$$

Each of the spacing $\Delta sl$ and the range Sw of the radar images is information included in the imaging parameters.

In addition, the relation between a position x in the x-axis direction on the inclined surface 51 and the distance sl based on the center position of the radar image is expressed as in the following formula (3).

$$sl = x\sin(\theta - \alpha) \qquad (3)$$

The following formula (4) is satisfied on the basis of the formula (2) and the formula (3).

$$x\sin(\theta - \alpha) = \Delta sl \times pixel - \frac{Sw}{2}\sin\theta \qquad (4)$$

The phase shift component calculating unit 21 calculates the position x on the inclined surface 51 corresponding to a pixel position "pixel" in the slant-range direction in the radar image by substituting the position "pixel" into the formula (4).

A plurality of reflected signals from scatterers are present in the pixel at the position "pixel" substituted into the formula (4).

The position "pixel" substituted into the formula (4) may be provided to the phase shift component calculating unit 21 by manual operation made by a user, or may be provided to the phase shift component calculating unit 21 from an external device, which is not illustrated, for example.

The phase shift component calculating unit 21 calculates the phase shift component $\varphi(x)$ at the position x in the x-axis direction on the inclined surface 51 by using the distance component $B_{1,2}$, the off-nadir angle $\theta$, the average R of the distances, the wavelength $\lambda$ of the emitted radio wave, the inclination angle $\alpha$, and an observation path parameter p (step ST3 in FIG. 6).

The observation path parameter p is a parameter indicating whether the observation path when the radar image is taken is repeat pass or single pass, which is p=2 in the case of repeat pass or p=1 in the case of single pass. The observation path parameter p may be provided to the phase shift component calculating unit 21 and the phase calculating unit 22 by manual operation made by a user, or may be provided to the phase shift component calculating unit 21 and the phase calculating unit 22 from an external device, which is not illustrated, for example.

The following formula (5) is a formula for calculating the phase shift component $\varphi(x)$ used by the phase shift component calculating unit 21.

$$\phi(\mathrm{x}) = \left(\frac{2p\pi B_{1,2}\cos(\theta - \alpha)}{\lambda R}\right) x \qquad (5)$$

The phase shift component calculating unit 21 outputs the phase shift component $\varphi(x)$ in the x-axis direction to the phase difference calculating unit 23.

The phase calculating unit 22 calculates the phase $\rho(z_0)$ on the parallel surface 52 with respect to the inclined surface 51 by using the distance component $B_{1,2}$, the off-nadir angle $\theta$, the average R of the distances, the wavelength $\lambda$ of the emitted radio wave, the inclination angle $\alpha$, the distance $z_0$, and the observation path parameter p (step ST4 in FIG. 6).

The following formula (6) is a formula for calculating the phase $\rho(z_0)$ used by the phase calculating unit 22.

$$\rho(z_0) = \left(\frac{2p\pi B_{1,2}}{\lambda R\sin(\theta - \alpha)}\right) z_0 \qquad (6)$$

The phase calculating unit 22 outputs the phase $\rho(z_0)$ to the phase difference calculating unit 23.

The phase difference calculating unit 23 calculates, in each of a plurality of reflected signals present in each of pixels included in the first and second radar images, the phase difference $\Delta\varphi(x,z_0)$ by using the phase shift component $\varphi(x)$ and the phase $\rho(z_0)$ (step ST5 in FIG. 6).

The phase difference $\Delta\varphi(x,z_0)$ is a phase difference, in each of the reflected signals, between the phase of the reflected signal with respect to the first radio wave receiving point $P_1$ and the phase of the reflected signal with respect to the second radio wave receiving point $P_2$.

The following formula (7) is a formula for calculating the phase difference $\Delta\varphi(x,z_0)$ used by the phase difference calculating unit 23.

$$\Delta\phi(\mathrm{x}, z_0) = \phi(x) + \rho(z_0) \qquad (7)$$

The phase difference calculating unit 23 outputs each phase difference $\Delta\varphi(x,z_0)$ to the image processing unit 13.

The image processing unit 13 performs a process of acquiring a suppressed image.

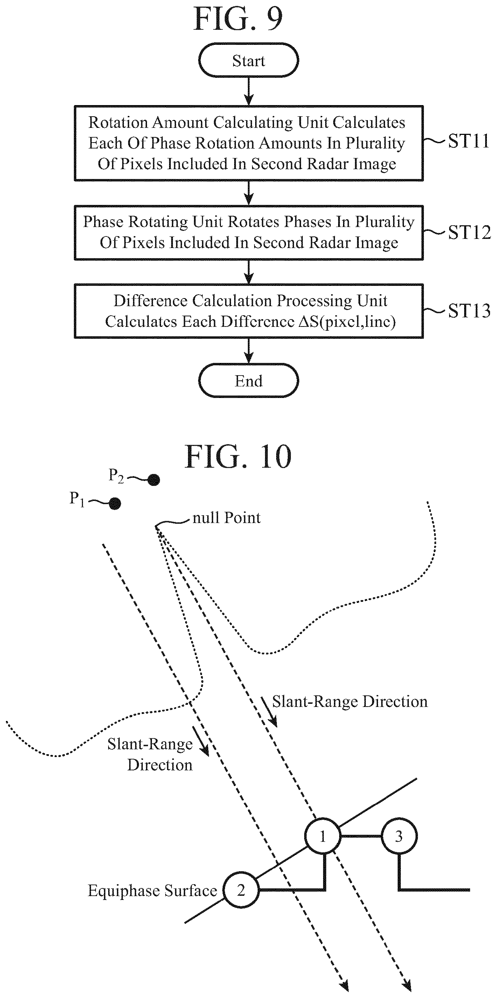

FIG. 9 is a flowchart illustrating the processing of the image processing unit 13.

The processing of the image processing unit 13 will now be explained in detail with reference to FIG. 9.

The rotation amount calculating unit 31 acquires each phase difference $\Delta\varphi(x,z_0)$ output from the phase difference calculating unit 23.

The rotation amount calculating unit 31 calculates each of phase rotation amounts $\exp[j\cdot\Delta\varphi(x,z_0)]$ in a plurality of pixels included in the second radar image from each phase difference $\Delta\varphi(x,z_0)$ (step ST11 in FIG. 9).

The rotation amount calculating unit 31 outputs each rotation amount $\exp[j\cdot\Delta\varphi(x,z_0)]$ to the phase rotating unit 33.

The phase rotating unit 33 acquires the second radar image from the radar image group 2 output from the radar image acquiring unit 11.

The phase rotating unit 33 performs the process rotating the phases in the plurality of pixels included in the second radar image on the basis of the respective rotation amounts $\exp[j\cdot\Delta\varphi(x,z_0)]$ output from the rotation amount calculating unit 31 (step ST12 in FIG. 9).

The following formula (8) is a formula representing the process of rotating a phase performed by the phase rotating unit 33.

$$S_2{}'(pixel, line) = S_2(pixel, line)exp[j\Delta\phi(x, z_0)] \qquad (8)$$

In the formula (8), $S_2(pixel,line)$ represents the pixel value of a pixel included in the second radar image output from the radar image acquiring unit 11, and $S_2'(pixel,line)$ represents the pixel value of a pixel included in the second radar image obtained by rotation of the phase in the pixel by the phase rotating unit 33.

The phase rotating unit 33 outputs a second radar image including a plurality of pixels obtained by phase rotation to the difference calculation processing unit 34.

The difference calculation processing unit 34 acquires the first radar image from the radar image group 2 output from the radar image acquiring unit 11, and acquires the second radar image including a plurality of pixels obtained by the phase rotation and output from the phase rotating unit 33.

The difference calculation processing unit 34 calculates a difference $\Delta S(pixel,line)$ between pixel values of pixels at corresponding pixel positions among a plurality of pixels included in the first radar image and among a plurality of pixels obtained by phase rotation included in the second radar image (step ST13 in FIG. 9).

The following formula (9) is a formula for calculating the difference $\Delta S(pixel,line)$ used by the difference calculation processing unit 34.

$$\Delta S(pixel, line) = S_1(pixel, line) - S_2'(pixel, line) \qquad (9)$$

In the formula (9), $S_1(pixel, line)$ represents the pixel value of a pixel included in the first radar image.

The difference calculation processing unit 34 outputs the suppressed image including the respective differences $\Delta s$ (pixel, line) to the outside of the unit.

Here, FIG. 10 is an explanatory diagram illustrating suppression of reflected signals present in one pixel in a case where the phases in the pixels included in the second radar image are not rotated by the phase rotating unit 33.

In FIG. 10, regarding a reflected signal assigned with "1", the distance from the scatterer that scatters the reflected signal to the first radio wave receiving point $P_1$ and the distance from the scatterer that scatters the reflected signal to the second radio wave receiving point $P_2$ are equal to each other. Thus, regarding the reflected signal assigned with "1", the phase difference $\Delta\varphi(x,z_0)$ between the phase with respect to the first radio wave receiving point $P_1$ and the phase with respect to the second radio wave receiving point $P_2$ is zero.

Because the difference $\Delta S(pixel, line)$ for the reflected signal assigned with "1" is thus zero, the reflected signal assigned with "1" is suppressed.

Regarding a reflected signal assigned with "2", the distance from the scatterer that scatters the reflected signal to the first radio wave receiving point $P_1$ and the distance from the scatterer that scatters the reflected signal to the second radio wave receiving point $P_2$ are not equal to each other. Thus, regarding the reflected signal assigned with "2", the phase difference $\Delta\varphi(x,z_0)$ between the phase with respect to the first radio wave receiving point $P_1$ and the phase with respect to the second radio wave receiving point $P_2$ is other than zero.

Because the difference $\Delta S(pixel, line)$ for the reflected signal assigned with "2" is thus other than zero, the reflected signal assigned with "2" is not suppressed.

Regarding a reflected signal assigned with "3" as well, the distance from the scatterer that scatters the reflected signal to the first radio wave receiving point $P_1$ and the distance from the scatterer that scatters the reflected signal to the second radio wave receiving point $P_2$ are not equal to each other. Thus, regarding the reflected signal assigned with "3", the phase difference $\Delta\varphi(x,z_0)$ between the phase with respect to the first radio wave receiving point $P_1$ and the phase with respect to the second radio wave receiving point $P_2$ is other than zero.

Because the difference $\Delta S(pixel, line)$ for the reflected signal assigned with "3" is thus other than zero, the reflected signal assigned with "3" is not suppressed.

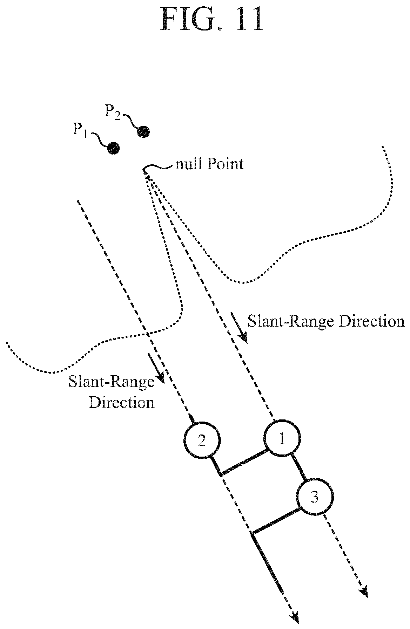

FIG. 11 is an explanatory diagram illustrating suppression of reflected signals present in one pixel in a case where the phases in pixels included in the second radar image are rotated by the phase rotating unit 33.

Regarding a reflected signal assigned with "1", as illustrated in FIG. 10, the distance from the scatterer that scatters the reflected signal to the first radio wave receiving point $P_1$ and the distance from the scatterer that scatters the reflected signal to the second radio wave receiving point $P_2$ are equal to each other. Thus, regarding the reflected signal assigned with "1", the phase difference $\Delta\varphi(x,z_0)$ between the phase with respect to the first radio wave receiving point $P_1$ and the phase with respect to the second radio wave receiving point $P_2$ is zero, and the phase rotation amount $\exp[j \cdot \Delta\varphi(x,z_0)]$ calculated by the rotation amount calculating unit 31 is zero.

Regarding the reflected signal assigned with "1", because the phase rotation amount $\exp[j \cdot \Delta\varphi(x,z_0)]$ is zero, the phase is not rotated by the phase rotating unit 33 as illustrated in FIGS. 10 and 11. Thus, because the phase difference $\Delta\varphi(x,z_0)$ is still zero for the reflected signal assigned with "1", the difference $\Delta S(pixel, line)$ is zero, and the reflected signal assigned with "1" is thus suppressed.

Regarding a reflected signal assigned with "2", as illustrated in FIG. 10, the distance from the scatterer that scatters the reflected signal to the first radio wave receiving point $P_1$ and the distance from the scatterer that scatters the reflected signal to the second radio wave receiving point $P_2$ are not equal to each other. Thus, regarding the reflected signal assigned with "2", the phase difference $\Delta\varphi(x,z_0)$ between the phase with respect to the first radio wave receiving point $P_1$ and the phase with respect to the second radio wave receiving point $P_2$ is other than zero. Thus, the phase rotation amount $\exp[j \cdot \Delta\varphi(x,z_0)]$ calculated by the rotation amount calculating unit 31 is other than zero.

Regarding the reflected signal assigned with "2" resulting from phase rotation, as illustrated in FIG. 11, the distance to the first radio wave receiving point $P_1$ and the distance to the second radio wave receiving point $P_2$ are not equal to each other even after the rotation by the rotation amount $\exp[j \cdot \Delta\varphi(x,z_0)]$ by the phase rotating unit 33. Thus, regarding the reflected signal assigned with "2" resulting from the phase rotation, the phase difference $\Delta\varphi(x,z_0)$ between the phase with respect to the first radio wave receiving point $P_1$ and the phase with respect to the second radio wave receiving point $P_2$ is other than zero.

Because the difference $\Delta S(pixel, line)$ for the reflected signal assigned with "2" resulting from the phase rotation is thus other than zero, the reflected signal assigned with "2" resulting from the phase rotation is not suppressed.

Regarding a reflected signal assigned with "3", as illustrated in FIG. 10, the distance from the scatterer that scatters the reflected signal to the first radio wave receiving point $P_1$ and the distance from the scatterer that scatters the reflected signal to the second radio wave receiving point $P_2$ are not equal to each other. Thus, regarding the reflected signal assigned with "3", the phase difference $\Delta\varphi(x,z_0)$ between the phase with respect to the first radio wave receiving point $P_1$ and the phase with respect to the second radio wave receiving point $P_2$ is other than zero. Thus, the phase rotation amount $\exp[j\cdot\Delta\varphi(x,z_0)]$ calculated by the rotation amount calculating unit 31 is other than zero.

Regarding the reflected signal assigned with "3", as illustrated in FIG. 11, the distance to the first radio wave receiving point $P_1$ and the distance to the second radio wave receiving point $P_2$ have become equal to each other as a result of the rotation by the rotation amount $\exp[j\cdot\Delta\varphi(x,z_0)]$ by the phase rotating unit 33. Thus, regarding the reflected signal assigned with "3" resulting from the phase rotation, the phase difference $\Delta\varphi(x,z_0)$ between the phase with respect to the first radio wave receiving point $P_1$ and the phase with respect to the second radio wave receiving point $P_2$ is zero.

Because the difference $\Delta S(pixel,line)$ for the reflected signal assigned with "3" resulting from the phase rotation is thus zero, the reflected signal assigned with "3" resulting from the phase rotation is suppressed.

In the first embodiment described above, the radar image processing device 10 has a configuration including the phase difference calculating unit 23 that calculates a phase difference, which is the difference between the phases with respect to the radio wave receiving points different from each other, of each of a plurality of reflected signals present in one pixel, and the rotation amount calculating unit 31 that calculates each of the phase rotation amounts in a plurality of pixels included in the second radar image from the respective phase differences, in which the difference calculating unit 32 rotates the phases in the plurality of pixels included in the second radar image on the basis of the respective rotation amounts, and calculates a difference between pixel values of pixels at corresponding pixel positions among the plurality of pixels included in the first radar image and the plurality of pixels obtained by the phase rotation included in the second radar image. The radar image processing device 10 is therefore capable of also suppressing a reflected signal with the difference between phases with respect to the radio wave receiving points different from each other not being zero.

Second Embodiment.

The first embodiment presents an example in which the radar image processing device 10 acquires a radar image group 2 including a first radar image and a second radar image, and outputs a suppressed image.

In a second embodiment, a radar image processing device 10 that acquires a radar image group 2 including two or more radar images capturing the same observation area taken from radio wave receiving points different from each other, and outputs a suppressed image will be described.

In the radar image processing device 10 of the second embodiment, the phase processing unit 12 and the image processing unit 13 perform processes on each combination of two radar images included in the radar image group 2. In this case, one radar image included in each combination will be referred to as a first radar image, and the other radar image included in the combination will be referred to as a second radar image.

Specifically, the phase shift component calculating unit 21, the phase calculating unit 22, and the phase difference calculating unit 23 repeat the process of calculating the phase difference $\Delta\varphi_i(x,z_0)$ until the process of calculating the phase difference $\Delta\varphi_i(x,z_0)$ is completed for all of the combinations i of two radar images. Symbol i is a variable representing a combination of two radar images.

The rotation amount calculating unit 31, the phase rotating unit 33, and the difference calculation processing unit 34 repeat the process of calculating the difference $\Delta S_i(pixel,line)$ until the process of calculating the difference $\Delta S_i(pixel,line)$ is completed for all of the combinations i of two radar images.

The radar image processing device 10 in the second embodiment has a configuration as illustrated in FIG. 1, that is similar to the radar image processing device 10 of the first embodiment.

The phase processing unit 12 in the second embodiment has a configuration as illustrated in FIG. 2, that is similar to the phase processing unit 12 of the first embodiment.

Note that the radar image group 2 includes two or more radar images, and the imaging parameter group 3 includes two or more imaging parameters.

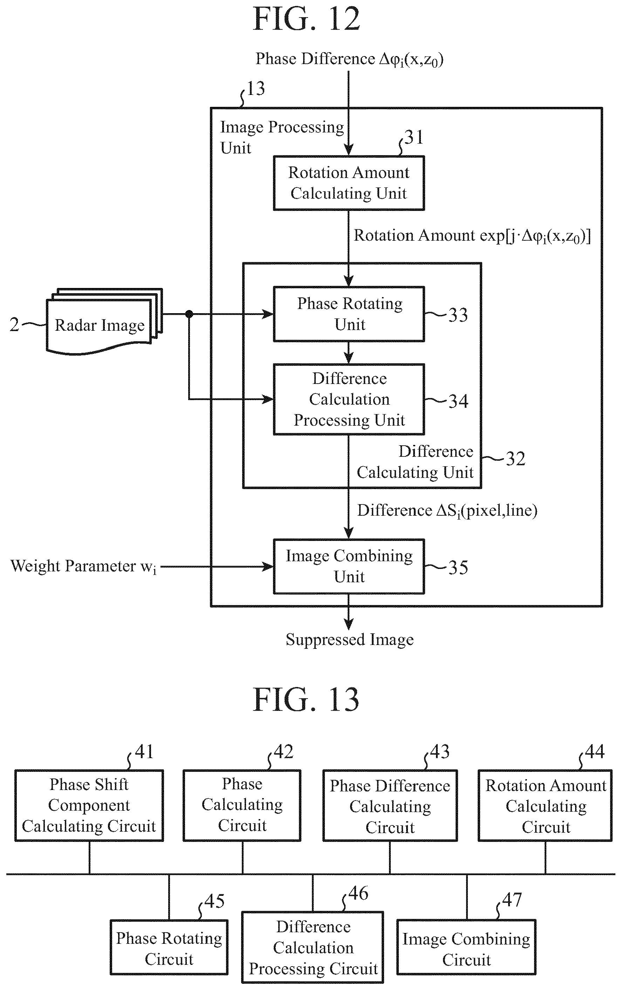

FIG. 12 is a configuration diagram illustrating an image processing unit 13 of the radar image processing device 10 according to the second embodiment.

FIG. 13 is a hardware configuration diagram illustrating hardware of each of the phase processing unit 12 and the image processing unit 13.

In FIGS. 12 and 13, reference numerals that are the same as those in FIGS. 3 and 4 represent the same or corresponding components, and the description thereof will thus not be repeated.

An image combining unit 35 is implemented by an image combining circuit 47 illustrated in FIG. 13, for example.

The image combining unit 35 acquires a weight parameter $w_i$ used for generation of a suppressed image.

The image combining unit 35 performs a process of combining differences $\Delta S_i(pixel,line)$ at corresponding pixel positions among the respective differences calculated for the respective combinations i by the difference calculation processing unit 34 by using the weight parameter $w_i$.

The image combining unit 35 outputs a suppressed image including the respective differences $S_{sup}$ (pixel, line) resulting from the combining to the outside of the unit.

In FIG. 2, it is assumed that each of the phase shift component calculating unit 21, the phase calculating unit 22, and the phase difference calculating unit 23, which are components of the phase processing unit 12, is implemented by such dedicated hardware as illustrated in FIG. 13.

In addition, in FIG. 12, it is assumed that each of the rotation amount calculating unit 31, the phase rotating unit 33, the difference calculation processing unit 34, and the image combining unit 35, which are components of the image processing unit 13, is implemented by such dedicated hardware as illustrated in FIG. 13.

Specifically, the phase processing unit 12 and the image processing unit 13 are assumed to be implemented by the phase shift component calculating circuit 41, the phase calculating circuit 42, the phase difference calculating circuit 43, the rotation amount calculating circuit 44, the phase rotating circuit 45, the difference calculation processing circuit 46, and the image combining circuit 47.

Note that each of the phase shift component calculating circuit 41, the phase calculating circuit 42, the phase difference calculating circuit 43, the rotation amount calculating circuit 44, the phase rotating circuit 45, the difference calculation processing circuit 46, and the image combining circuit 47 may be a single circuit, a composite circuit, a programmed processor, a parallel-programmed processor, an ASIC, an FPGA, or a combination thereof, for example.

The components of the phase processing unit 12 and the components of the image processing unit 13 are not limited to those implemented by dedicated hardware. The phase processing unit 12 and the image processing unit 13 may be implemented by software, firmware, or a combination of software and firmware.

In the case where the phase processing unit 12 is implemented by software, firmware, or the like, programs for causing a computer to perform procedures of the phase shift component calculating unit 21, the phase calculating unit 22, and the phase difference calculating unit 23 are stored in a memory 61 illustrated in FIG. 5.

In addition, in the case where the image processing unit 13 is implemented by software, firmware, or the like, programs for causing a computer to perform procedures of the rotation amount calculating unit 31, the phase rotating unit 33, the difference calculation processing unit 34, and the image combining unit 35 are stored in the memory 61.

A processor 62 of the computer thus executes the programs stored in the memory 61.

Next, the operation of the radar image processing device 10 will be explained.

The phase processing unit 12 performs a process of calculating the phase difference $\Delta\varphi_i(x,z_0)$ for each combination i of two radar images among the two or more radar images included in the radar image group 2.

The phase shift component calculating unit 21 acquires a combination of two imaging parameters associated with the two radar images from the imaging parameter group 3 output from the radar image acquiring unit 11.

Herein, one radar image included in the combination i will be referred to as a first radar image, and the other radar image included in the combination i will be referred to as a second radar image.

A radio wave receiving point for a first radar image included in one combination and a radio wave receiving point for a first radar image included in another combination are different from each other. Herein, however, for convenience of explanation, both of such radio wave receiving points will be referred to as first radio wave receiving points $P_1$.

In addition, a radio wave receiving point for a second radar image included in one combination and a radio wave receiving point for a second radar image included in another combination are different from each other. Herein, however, for convenience of explanation, both of such radio wave receiving points will be referred to as second radio wave receiving points $P_2$.

An imaging parameter associated with the first radar image will be referred to as a first imaging parameter, and an imaging parameter associated with the second radar image will be referred to as a second imaging parameter.

In addition, the phase shift component calculating unit 21 acquires the inclination angle $\alpha$.

The phase calculating unit 22 acquires the first imaging parameter, the second imaging parameter, the inclination angle $\alpha$, and the distance $z_0$.

The phase shift component calculating unit 21 calculates the position x on the inclined surface 51 corresponding to a pixel position "pixel" in the slant-range direction in the radar image by substituting the position "pixel" into the formula (4).

The pixel at the position "pixel" substituted into the formula (4) is a pixel in which a plurality of reflected signals from scatterers are present.

The phase shift component calculating unit 21 calculates the phase shift component $\varphi_i(x)$ in the x-axis direction on the inclined surface 51 by using the distance component $B_{1,2}$, the off-nadir angle $\theta$, the average R of the distances, the wavelength $\lambda$ of the emitted radio wave, the inclination angle $\alpha$, and the observation path parameter p.

The following formula (10) is a formula for calculating the phase shift component $\varphi_i(x)$ used by the phase shift component calculating unit 21.

$$\phi_i(\text{x}) = \left(\frac{2p\pi B_{1,2}\cos(\theta - \alpha)}{\lambda R}\right)x \qquad (1\ 0)$$

The phase shift component calculating unit 21 outputs the phase shift component $\varphi_i(x)$ in the x-axis direction to the phase difference calculating unit 23.

The phase calculating unit 22 calculates the phase $\rho_i(z_0)$ on the parallel surface 52 with respect to the inclined surface 51 by using the distance component $B_{1,2}$, the off-nadir angle $\theta$, the average R of the distances, the wavelength $\lambda$ of the emitted radio wave, the inclination angle $\alpha$, the distance $z_0$, and the observation path parameter p. The same applies to the phase $\rho_i(z_0)$ in any combination.

The following formula (11) is a formula for calculating the phase $\rho_i(z_0)$ used by the phase calculating unit 22.

$$\rho_i(z_0) = \left(\frac{2p\pi B_{1,2}}{\lambda R \sin(\theta - \alpha)}\right)z_0 \qquad (1\ 1)$$

The phase calculating unit 22 outputs the phase $\rho_i(z_0)$ to the phase difference calculating unit 23.

The phase difference calculating unit 23 calculates, in each of a plurality of reflected signals present in one pixel in each combination i, a phase difference $\Delta\varphi_i(x,z_0)$ between the phase with respect to the first radio wave receiving point $P_1$ and the phase with respect to the second radio wave receiving point $P_2$ by using the phase shift component $\varphi_i(x)$ and the phase $\rho_i(z_0)$.

The following formula (12) is a formula for calculating the phase difference $\Delta\varphi_i(x,z_0)$ used by the phase difference calculating unit 23.

$$\Delta\phi_i(\text{x}, z_0) = \phi_i(x) + \rho_i(z_0) \qquad (1\ 2)$$

The phase difference calculating unit 23 outputs each phase difference $\Delta\varphi_i(x,z_0)$ to the image processing unit 13.

The rotation amount calculating unit 31 acquires each phase difference $\Delta\varphi_i(x,z_0)$ output from the phase difference calculating unit 23.

The rotation amount calculating unit 31 calculates, for each combination i, each of phase rotation amounts exp$[j\cdot\Delta\varphi_i(x,z_0)]$ in a plurality of pixels included in the second radar image from each phase difference $\Delta\varphi_i(x,z_0)$.

The rotation amount calculating unit 31 outputs each rotation amount exp$[j\cdot\Delta\varphi_i(x,z_0)]$ to the phase rotating unit 33.

The phase rotating unit 33 acquires the second radar image included in the combination i from the radar image group 2 output from the radar image acquiring unit 11.

The phase rotating unit 33 performs the process of rotating the phases in the plurality of pixels included in the acquired second radar image on the basis of the respective rotation amounts exp$[j\cdot\Delta\varphi_i(x,z_0)]$ output from the rotation amount calculating unit 31.

The following formula (13) is a formula representing the process of rotating a phase performed by the phase rotating unit 33.

$$S_2{'}(pixel, line) = S_2(pixel, line)exp[j\Delta\phi_i(x, z_0)] \qquad (1\ 3)$$

The phase rotating unit 33 outputs a second radar image including a plurality of pixels obtained by phase rotation to the difference calculation processing unit 34.

The difference calculation processing unit 34 acquires the first radar image included in the combination i from the radar image group 2 output from the radar image acquiring unit 11, and acquires the second radar image including a plurality of pixels obtained by the phase rotation and output from the phase rotating unit 33.

The difference calculation processing unit 34 calculates the difference $\Delta S_i(pixel,line)$ between pixel values of pixels at corresponding pixel positions among a plurality of pixels included in the acquired first radar image and among a plurality of pixels obtained by phase rotation included in the acquired second radar image.

The following formula (14) is a formula for calculating the difference $\Delta S_i(pixel,line)$ used by the difference calculation processing unit 34.

$$\Delta S_i(pixel, line) = S_1(pixel, line) - S_2{'}(pixel, line) \qquad (1\ 4)$$

The difference calculation processing unit 34 outputs each difference $\Delta S_i(pixel,line)$ to the image combining unit 35.

The rotation amount calculating unit 31, the phase rotating unit 33, and the difference calculation processing unit 34 repeat the process of calculating the difference $\Delta S_i$(pixel,line) until the process of calculating the difference $\Delta S_i$(pixel,line) is completed for all of the combinations i of two radar images.

The image combining unit 35 acquires a weight parameter $w_i$ used for generation of a suppressed image.

The weight parameter $w_i$ may be provided to the image combining unit 35 by manual operation made by a user, or may be provided to the image combining unit 35 from an external device, which is not illustrated.

The image combining unit 35 combines differences $\Delta Si$(pixel,line) at corresponding pixel positions among the respective differences calculated for the respective combinations i by the difference calculation processing unit 34 by using the weight parameter $w_i$.

The image combining unit 35 outputs a suppressed image including the respective differences $S_{sup}$ (pixel, line) resulting from the combining to the outside of the unit.

For the method of combining the differences $\Delta S_i$(pixel,line) in all the combination, a method of obtaining an arithmetic mean or a method of obtaining a geometric mean can be used.

In a case where the method of obtaining an arithmetic mean is used, the image combining unit 35 combines the differences $\Delta S_i$(pixel,line) in all the combinations by the following formula (15).

$$S_{sup}(pixel, line) = \frac{1}{N}\sum_{i}^{N} w_i \Delta S_i(pixel, line) \qquad (1\ 5)$$

In a case where the method of obtaining a geometric mean is used, the image combining unit 35 combines the differences $\Delta S_i$(pixel,line) in all the combinations by the following formula (16).

$$S_{sup}(pixel, line) = \left\{ \prod_{i}^{N} \Delta S_i(pixel, line)^{w_i} \right\}^{1/N} \qquad (1\ 6)$$

In the formulas (15) and (16), N represents the number of combinations of two radar images.

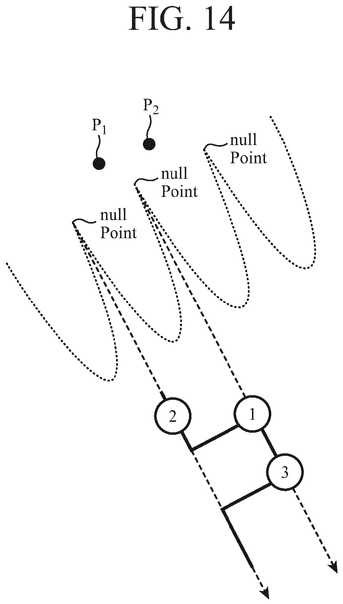

Here, FIG. 14 is an explanatory diagram illustrating a plurality of reflected signals present in one pixel in a case where only two radar images are included in the radar image group 2 like the radar image processing device 10 of the first embodiment.

In the case where only two radar images are included in the radar image group 2, a plurality of null points may be formed as a result of the process of calculating the differences $\Delta S_i$(pixel, line) performed by the difference calculation processing unit 34 as illustrated in FIG. 14.

In the example of FIG. 14, null points are formed in all of a reflected signal assigned with "1", a reflected signal assigned with "2", and a reflected signal assigned with 3".

Thus, in the example of FIG. 14, all of the reflected signal assigned with "1", the reflected signal assigned with "2", and the reflected signal assigned with "3" are suppressed.

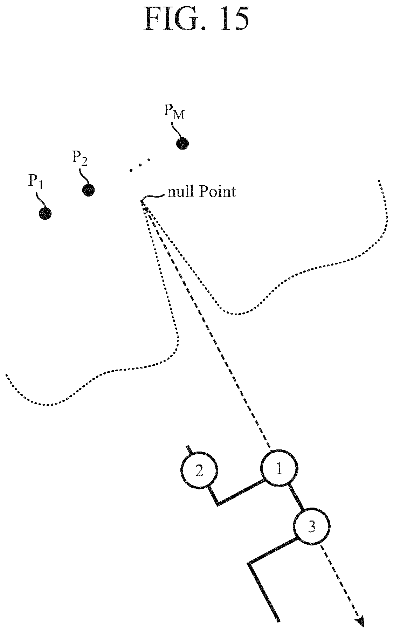

FIG. 15 is an explanatory diagram illustrating a plurality of reflected signals present in one pixel in a case where two or more radar images are included in the radar image group 2 like the radar image processing device 10 of the second embodiment.

In FIG. 15, the number of radar images included in the radar image group 2 is M, and $P_M$ represents the position of the platform when an M-th radar image is taken.

Because the number of radar images included in the radar image group 2 is two or larger and the image combining unit 35 combines the differences $\Delta S_i$(pixel,line) at corresponding pixel positions, the number of null points that are formed is reduced as compared with that in the case where the number of radar images is two.

In the example of FIG. 15, the number of null points that are formed is one, and no null point is formed in the reflected signal assigned with "2".

In the second embodiment described above, the radar image processing device 10 has a configuration including the image combining unit 35 that combines differences $\Delta S_i$(pixel,line) at corresponding pixel positions among the respective differences calculated for the respective combinations i by the difference calculation processing unit 34. The radar image processing device 10 is therefore capable of reducing the number of null points that are formed, which can prevent reflected signals that need to be maintained from being suppressed.

Third Embodiment.

The second embodiment presents an example in which the radar image processing device 10 output the differences $S_{sup}$(pixel,line) obtained by the combining as a suppressed image.

In a third embodiment, a radar image processing device 10 that calculates an image in which a plurality of reflected signals present in one pixel are extracted from the differences $S_{sup}$(pixel,line) resulting from the combining by the image combining unit 35 will be described.

The radar image processing device 10 in the third embodiment has a configuration as illustrated in FIG. 1, that is similar to the radar image processing device 10 of the first or second embodiment.

The phase processing unit 12 in the third embodiment has a configuration as illustrated in FIG. 2, that is similar to the phase processing unit 12 of the first or second embodiment.

Note that the radar image group 2 includes two or more radar images, and the imaging parameter group 3 includes two or more imaging parameters.

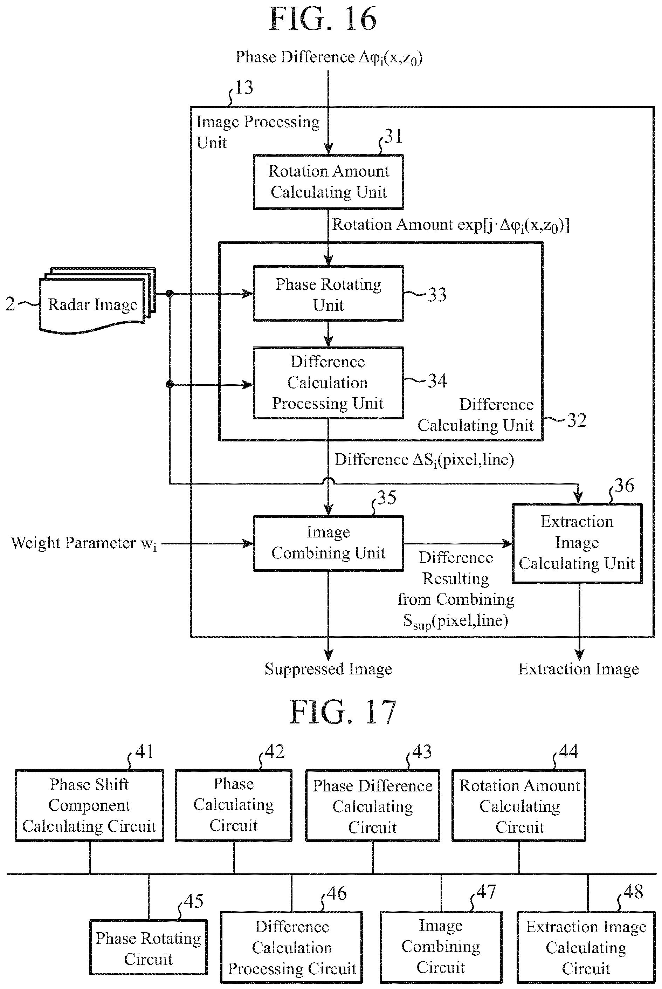

FIG. 16 is a configuration diagram illustrating an image processing unit 13 of the radar image processing device 10 according to the third embodiment.

FIG. 17 is a hardware configuration diagram illustrating hardware of each of the phase processing unit 12 and the image processing unit 13.

In FIGS. 16 and 17, reference numerals that are the same as those in FIGS. 3, 4, 12, and 13 represent the same or corresponding components, and the description thereof will thus not be repeated.

An extraction image calculating unit 36 is implemented by an extraction image calculating circuit 48 illustrated in FIG. 17, for example.

The extraction image calculating unit 36 acquires the first radar image from the radar image group 2 output from the radar image acquiring unit 11, and acquires the respective differences $S_{sup}$(pixel,line) resulting from the combining output from the image combining unit 35.

The extraction image calculating unit 36 performs a process of calculating an image in which a plurality of reflected signals present in one pixel are extracted on the basis of the pixel values of a plurality of pixels included in the first radar image and the respective differences $S_{sup}$(pixel,line) resulting from the combining.

In FIG. 2, it is assumed that each of the phase shift component calculating unit 21, the phase calculating unit 22, and the phase difference calculating unit 23, which are components of the phase processing unit 12, is implemented by such dedicated hardware as illustrated in FIG. 17.

In addition, in FIG. 16, it is assumed that each of the rotation amount calculating unit 31, the phase rotating unit 33, the difference calculation processing unit 34, the image combining unit 35, and the extraction image calculating unit 36, which are components of the image processing unit 13, is implemented by such dedicated hardware as illustrated in FIG. 17.

Specifically, the phase processing unit 12 and the image processing unit 13 are assumed to be implemented by the phase shift component calculating circuit 41, the phase calculating circuit 42, the phase difference calculating circuit 43, the rotation amount calculating circuit 44, the phase rotating circuit 45, the difference calculation processing circuit 46, the image combining circuit 47, and the extraction image calculating circuit 48.

The components of the phase processing unit 12 and the components of the image processing unit 13 are not limited to those implemented by dedicated hardware. The phase processing unit 12 and the image processing unit 13 may be implemented by software, firmware, or a combination of software and firmware.

Next, the operation of the radar image processing device 10 will be explained.

Note that the radar image processing device 10 is similar to the radar image processing device 10 of the second embodiment except that the extraction image calculating unit 36 is included, and thus, only the operation of the extraction image calculating unit 36 will be explained here.

The extraction image calculating unit 36 acquires the first radar image from the radar image group 2 output from the radar image acquiring unit 11, and acquires the respective differences $S_{sup}$(pixel,line) resulting from the combining output from the image combining unit 35.

The extraction image calculating unit 36 calculates a pixel value $S_{ext}$(pixel,line) of a pixel in which a plurality of reflected signals are present from the pixel values of a plurality of pixels included in the first radar image and the respective differences $S_{sup}$(pixel,line) resulting from the combining.

The following formula (17) is a formula for calculating the pixel value $S_{ext}$(pixel,line) used by the extraction image calculating unit 36.

$$S_{ext}(pixel, line) = S_1(pixel, line)/S_{sup}(pixel, line) \qquad (1 7)$$

The extraction image calculating unit 36 outputs, to the outside of the unit, an image including the pixel having the

pixel value $S_{ext}$(pixel, line) as an image in which a plurality of reflected signal present in one pixel are extracted.

In the third embodiment described above, the radar image processing device 10 has a configuration including the extraction image calculating unit 36 that calculates an image in which a plurality of reflected signals present in one pixel are extracted on the basis of the pixel values of a plurality of pixels included in the first radar image and the respective differences $S_{sup}$(pixel,line) resulting from the combining. The radar image processing device 10 is therefore capable of outputting not only a suppressed image in which reflected signals are suppressed but also an extraction image in which reflected signals are extracted.

Fourth Embodiment.

In a fourth embodiment, a radar image processing device 10 that calculates, as an interference phase $\Delta\gamma_{C1,C2}$(pixel,line), the phase at each pixel position from the difference $\Delta S_{C1}$(pixel,line) at each pixel position in a first combination C1 and the difference $\Delta S_{C2}$(pixel,line) at each pixel position in a second combination C2 will be described.

The radar image processing device 10 in the fourth embodiment has a configuration as illustrated in FIG. 1, that is similar to the radar image processing device 10 of the first, second, or third embodiment.

The phase processing unit 12 in the fourth embodiment has a configuration as illustrated in FIG. 2, that is similar to the phase processing unit 12 of the first, second, or third embodiment.

Note that, the radar image group 2 includes three or more radar images capturing the same observation area taken from radio wave receiving points different from each other, and the imaging parameter group 3 includes three or more imaging parameters.

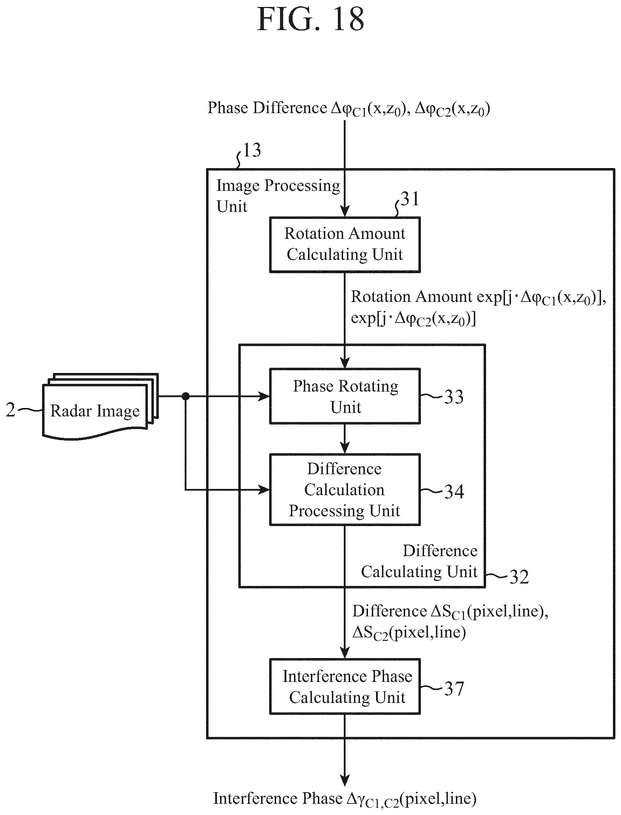

FIG. 18 is a configuration diagram illustrating the image processing unit 13 of the radar image processing device 10 according to the fourth embodiment.

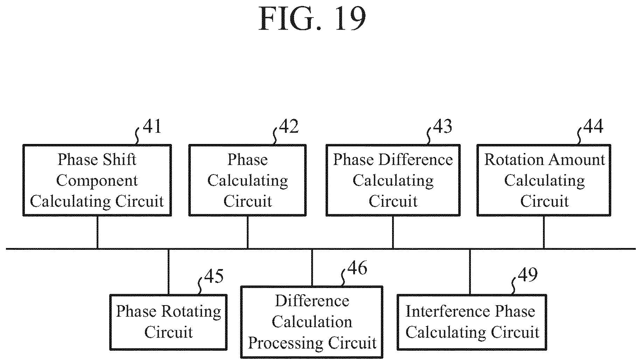

FIG. 19 is a hardware configuration diagram illustrating hardware of each of the phase processing unit 12 and the image processing unit 13.

In FIGS. 18 and 19, reference numerals that are the same as those in FIGS. 3, 4, 12, 13, 16, and 17 represent the same or corresponding components, and the description thereof will thus not be repeated.

In the radar image processing device 10 of the fourth embodiment, a combination of any two radar images included in the radar image group 2 will be referred to as a first combination C1. In addition, a combination of any two radar images included in the radar image group 2 will be referred to as a second combination C2.

The two radar images included in the first combination C1 and the two radar images included in the second combination C2 are different from each other. Note that, one of the two radar images included in the first combination C1 may be the same as any one of the two radar images included in the second combination C2.

In the radar image processing device 10 of the fourth embodiment, the difference calculation processing unit 34 calculates the difference $\Delta S_{C1}$(pixel,line) at each pixel position in the first combination C1, and the difference $\Delta S_{C2}$(pixel,line) at each pixel position in the second combination C2.

The interference phase calculating unit 37 is implemented by an interference phase calculating circuit 49 illustrated in FIG. 19, for example.

The interference phase calculating unit 37 acquires the differences $\Delta S_{C1}$(pixel,line) at the respective pixel positions calculated for the first combination C1, and the differences $\Delta S_{C2}$(pixel,line) at the respective pixel positions calculated for the second combination C2 by the difference calculation processing unit 14.

The interference phase calculating unit 37 calculates, as interference phases $\Delta\gamma_{C1,C2}$(pixel,line), the phases at the respective pixel positions from the differences $\Delta S_{C1}$(pixel,line) and the differences $\Delta S_{C2}$(pixel,line).

In FIG. 2, it is assumed that each of the phase shift component calculating unit 21, the phase calculating unit 22, and the phase difference calculating unit 23, which are components of the phase processing unit 12, is implemented by such dedicated hardware as illustrated in FIG. 19.

In addition, in FIG. 18, it is assumed that each of the rotation amount calculating unit 31, the phase rotating unit 33, the difference calculation processing unit 34, and the interference phase calculating unit 37, which are components of the image processing unit 13, is implemented by such dedicated hardware as illustrated in FIG. 19.

Specifically, the phase processing unit 12 and the image processing unit 13 are assumed to be implemented by the phase shift component calculating circuit 41, the phase calculating circuit 42, the phase difference calculating circuit 43, the rotation amount calculating circuit 44, the phase rotating circuit 45, the difference calculation processing circuit 46, and the interference phase calculating circuit 49.

The components of the phase processing unit 12 and the components of the image processing unit 13 are not limited to those implemented by dedicated hardware. The phase processing unit 12 and the image processing unit 13 may be implemented by software, firmware, or a combination of software and firmware.

Next, the operation of the radar image processing device 10 will be explained.

The phase processing unit 12 performs a process of calculating the phase differences $\Delta\varphi_{C1}(x,z_0)$ for the first combination C1, and a process of calculating the phase differences $\Delta\varphi_{C2}(x,z_0)$ for the second combination C2.

The process of calculating a phase difference performed by the phase processing unit 12 will now be explained in detail.

First, the phase shift component calculating unit 21 acquires a combination of two imaging parameters associated with the two radar images included in the first combination C1 from the imaging parameter group 3 output from the radar image acquiring unit 11.

Herein, one radar image included in the first combination C1 will be referred to as a first radar image, and the other radar image included in the first combination C1 will be referred to as a second radar image.

In addition, an imaging parameter associated with the first radar image will be referred to as a first imaging parameter, and an imaging parameter associated with the second radar image will be referred to as a second imaging parameter.

In addition, the phase shift component calculating unit 21 acquires the inclination angle $\alpha$.

The phase calculating unit 22 acquires the first imaging parameter, the second imaging parameter, the inclination angle $\alpha$, and the distance $z_0$.

The phase shift component calculating unit 21 calculates the position x on the inclined surface 51 corresponding to a pixel position "pixel" in the slant-range direction in the radar image by substituting the position "pixel" into the formula (4).

The phase shift component calculating unit 21 calculates the phase shift component $\varphi_{C1}(x)$ in the x-axis direction on the inclined surface 51 for the first combination C1 by using the distance component $B_{1,2}$, the off-nadir angle $\theta$, the average R of the distances, the wavelength $\lambda$ of the emitted radio wave, the inclination angle $\alpha$, and the observation path parameter p.

The following formula (18) is a formula for calculating the phase shift component $\varphi_{C1}(x)$ used by the phase shift component calculating unit 21.

$$\phi_{C1}(\text{x}) = \left(\frac{2p\pi B_{1,2}\cos(\theta - \alpha)}{\lambda R}\right)x \qquad (1\ 8)$$

The phase shift component calculating unit 21 outputs the phase shift component $\varphi_{C1}(x)$ in the x-axis direction to the phase difference calculating unit 23.

Subsequently, the phase shift component calculating unit 21 acquires a combination of two imaging parameters associated with the two radar images included in the second combination C2 from the imaging parameter group 3 output from the radar image acquiring unit 11.

Herein, one radar image included in the second combination C2 will be referred to as a first radar image, and the other radar image included in the second combination C2 will be referred to as a second radar image.

In addition, an imaging parameter associated with the first radar image will be referred to as a first imaging parameter, and an imaging parameter associated with the second radar image will be referred to as a second imaging parameter.

In addition, the phase shift component calculating unit 21 acquires the inclination angle $\alpha$.

The phase calculating unit 22 acquires the first imaging parameter, the second imaging parameter, the inclination angle $\alpha$, and the distance $z_0$.

The phase shift component calculating unit 21 calculates the position x on the inclined surface 51 corresponding to a pixel position "pixel" in the slant-range direction in the radar image by substituting the position "pixel" into the formula (4).

The phase shift component calculating unit 21 calculates the phase shift component $\varphi_{C2}(x)$ in the x-axis direction on the inclined surface 51 for the second combination C2 by using the distance component $B_{1,2}$, the off-nadir angle $\theta$, the average R of the distances, the wavelength $\lambda$ of the emitted radio wave, the inclination angle $\alpha$, and the observation path parameter p.

The following formula (19) is a formula for calculating the phase shift component $\varphi_{C2}(x)$ used by the phase shift component calculating unit 21.

$$\phi_{C2}(\text{x}) = \left(\frac{2p\pi B_{1,2}\cos(\theta - \alpha)}{\lambda R}\right)x \qquad (1\ 9)$$

The phase shift component calculating unit 21 outputs the phase shift component $\varphi_{C2}(x)$ in the x-axis direction to the phase difference calculating unit 23.

The phase calculating unit 22 calculates the phases $\rho_{C1}(z_0)$ and $\rho_{C2}(z_0)$ on the parallel surface 52 with respect to the inclined surface 51 by using the distance component $B_{1,2}$, the off-nadir angle $\theta$, the average R of the distances, the wavelength $\lambda$ of the emitted radio wave, the inclination angle $\alpha$, the distance $z_0$, and the observation path parameter p.

The following formula (20) is a formula for calculating the phases $\rho_{C1}(z_0)$ and $\rho_{C2}(z_0)$ used by the phase calculating unit 22.

$$\rho_{C1}(z_0) = \rho_{C2}(z_0) = \left(\frac{2p\pi B_{1,2}}{\lambda R \sin(\theta - \alpha)}\right) z_0 \qquad (20)$$

The phase calculating unit 22 outputs the phases $\rho_{C1}(z_0)$ and $\rho_{C2}(z_0)$ to the phase difference calculating unit 23.

The phase difference calculating unit 23 acquires the respective phase shift components $\varphi_{C2}(x)$ and $\varphi_{C1}(x)$ output from the phase shift component calculating unit 21, and acquires the respective phases $\rho_{C1}(z_0)$ and $\rho_{C2}(z_0)$ output from the phase calculating unit 22.

The phase difference calculating unit 23 calculates, for the first combination C1, the phase difference $\Delta\varphi_{C1}(x,z_0)$ in each of a plurality of reflected signals present in one pixel by using the phase shift component $\varphi_{C1}(x)$ and the phase $\rho_{C1}(z_0)$.

The following formula (21) is a formula for calculating the phase difference $\Delta\varphi_{C1}(x,z_0)$ used by the phase difference calculating unit 23.

$$\Delta\phi_{C1}(\mathrm{x}, z_0) = \phi_{C1}(x) + \rho_{C1}(z_0) \qquad (21)$$

The phase difference calculating unit 23 outputs each phase difference $\Delta\varphi_{C1}(x,z_0)$ to the image processing unit 13.

Subsequently, the phase difference calculating unit 23 calculates, for the second combination C2, the phase difference $\Delta\varphi_{C2}(x,z_0)$ in each of a plurality of reflected signals present in one pixel by using the phase shift component $\varphi_{C2}(x)$ and the phase $\rho_{C2}(z_0)$.

The following formula (22) is a formula for calculating the phase difference $\Delta\varphi_{C2}(x,z_0)$ used by the phase difference calculating unit 23.

$$\Delta\phi_{C2}(\mathrm{x}, z_0) = \phi_{C2}(x) + \rho_{C2}(z_0) \qquad (22)$$

The phase difference calculating unit 23 outputs each phase difference $\Delta\varphi_{C2}(x,z_0)$ to the image processing unit 13.

The rotation amount calculating unit 31 acquires the respective phase differences $\Delta\varphi_{C1}(x,z_0)$ and $\Delta\varphi_{C2}(x,z_0)$ output from the phase difference calculating unit 23.

The rotation amount calculating unit 31 calculates, for the first combination C1, each of phase rotation amounts $\exp[j \cdot \Delta\varphi_{C1}(x,z_0)]$ in a plurality of pixels included in the second radar image from each phase difference $\Delta\varphi_{C1}(x,z_0)$.

The rotation amount calculating unit 31 outputs each rotation amount $\exp[j \cdot \Delta\varphi_{C1}(x,z_0)]$ to the phase rotating unit 33.

Subsequently, the rotation amount calculating unit 31 calculates, for the second combination C2, each of phase rotation amounts $\exp[j \cdot \Delta\varphi_{C2}(x,z_0)]$ in a plurality of pixels included in the second radar image from each phase difference $\Delta\varphi_{C2}(x,z_0)$.

The rotation amount calculating unit 31 outputs each rotation amount $\exp[j \cdot \Delta\varphi_{C2}(x,z_0)]$ to the phase rotating unit 33.

The phase rotating unit 33 first acquires the second radar image included in the first combination C1 from the radar image group 2 output from the radar image acquiring unit 11.

The phase rotating unit 33 performs the process of rotating the phases in the plurality of pixels included in the acquired second radar image on the basis of the respective rotation amounts $\exp[j \cdot \Delta\varphi_{C1}(x,z_0)]$ output from the rotation amount calculating unit 31.

The following formula (23) is a formula representing the process of rotating a phase performed by the phase rotating unit 33.

$$S_2{}'(pixel, line) = S_2(pixel, line)exp[j\Delta\phi_{C1}(x, z_0)] \qquad (23)$$

The phase rotating unit 33 outputs a second radar image including a plurality of pixels obtained by phase rotation to the difference calculation processing unit 34.

Subsequently, the phase rotating unit 33 acquires the second radar image included in the second combination C2 from the radar image group 2 output from the radar image acquiring unit 11.

The phase rotating unit 33 performs the process of rotating the phases in the plurality of pixels included in the acquired second radar image on the basis of the respective rotation amounts exp[j · $\Delta\varphi_{C2}(x,z_0)$] output from the rotation amount calculating unit 31.

The following formula (24) is a formula representing the process of rotating a phase performed by the phase rotating unit 33.

$$S_2'(pixel, line) = S_2(pixel, line)exp[j\Delta\phi_{C2}(x, z_0)] \qquad (2\ 4)$$

The phase rotating unit 33 outputs a second radar image including a plurality of pixels obtained by phase rotation to the difference calculation processing unit 34.

The difference calculation processing unit 34 acquires the first radar image included in the first combination C1 from the radar image group 2 output from the radar image acquiring unit 11.

The difference calculation processing unit 34 also acquires the second radar image including a plurality of pixels obtained by the phase rotation on the first combination C1 output from the phase rotating unit 33.

The difference calculation processing unit 34 calculates the difference $\Delta S_{C1}(pixel,line)$ between pixel values of pixels at corresponding pixel positions among a plurality of pixels included in the acquired first radar image and among a plurality of pixels obtained by phase rotation included in the acquired second radar image.

The following formula (25) is a formula for calculating the difference $\Delta S_{C1}(pixel,line)$ used by the difference calculation processing unit 34.

$$\Delta S_{C1}(pixel, line) = S_1(pixel, line) - S_2'(pixel, line) \qquad (2\ 5)$$

The difference calculation processing unit 34 outputs each difference $\Delta S_{C1}(pixel,line)$ to the interference phase calculating unit 37.

Subsequently, the difference calculation processing unit 34 acquires the first radar image included in the second combination C2 from the radar image group 2 output from the radar image acquiring unit 11.

The difference calculation processing unit 34 also acquires the second radar image including a plurality of pixels obtained by the phase rotation on the second combination C2 output from the phase rotating unit 33.

The difference calculation processing unit 34 calculates the difference $\Delta S_{C2}(pixel,line)$ between pixel values of pixels at corresponding pixel positions among a plurality of pixels included in the acquired first radar image and among a plurality of pixels obtained by phase rotation included in the acquired second radar image.

The following formula (26) is a formula for calculating the difference $\Delta S_{C2}(pixel,line)$ used by the difference calculation processing unit 34.

$$\Delta S_{C2}(pixel, line) = S_1(pixel, line) - S_2'(pixel, line) \qquad (2\ 6)$$

The difference calculation processing unit 34 outputs each difference $\Delta S_{C2}(pixel,line)$ to the interference phase calculating unit 37.

The interference phase calculating unit 37 acquires the differences $\Delta S_{C1}(pixel,line)$ at the respective pixel positions calculated for the first combination C1 by the difference calculation processing unit 14.

The interference phase calculating unit 37 also acquires the differences $\Delta S_{C2}(pixel,line)$ at the respective pixel positions calculated for the second combination C2 by the difference calculation processing unit 14.

The interference phase calculating unit 37 calculates, as interference phases $\Delta\gamma_{C1,C2}(pixel,line)$, the phases at the respective pixel positions from the differences $\Delta S_{C1}(pixel,line)$ and the differences $\Delta S_{C2}(pixel,line)$ by using the following formula (27) or formula (28).

$$\Delta\gamma_{C1,C2} = \angle(\Delta S_{C1}/\Delta S_{C2}) \qquad (2\ 7)$$

$$\Delta\gamma_{C1,C2} = \angle\Delta S_{C1} - \angle\Delta S_{C2} \qquad (2\ 8)$$

In the formula (27) and the formula (28), L is a symbol representing the argument of a complex number.

The interference phases $\Delta\gamma_{C1,C2}(pixel,line)$ are the phases of only the reflected signals remaining without being suppressed among a plurality of reflected signals present in one pixel.

The interference phase calculating unit 37 outputs the interference phases $\Delta\gamma_{C1,C2}(pixel,line)$ to the outside of the unit.

For example, when signals reflected by a ground surface and signals reflected by the roof of a building are present in one pixel, the signals reflected by the ground surface are suppressed by the phase processing unit 12 and the image processing unit 13, and only the signals reflected by the roof of the building remain. Thus, the interference phases $\Delta\gamma_{C1,C2}$ (pixel,line) are calculated as the phases of the signals reflected by the roof of the building.

In the fourth embodiment described above, the radar image processing device 10 has a configuration including the interference phase calculating unit 37 that calculates, as an interference phase $\Delta\gamma_{C1,C2}$(pixel,line), the phase at each pixel position from the difference $\Delta S_{C1}$(pixel,line) in the first combination C1 and the difference $\Delta S_{C2}$(pixel,line) in the second combination C2. The radar image processing device 10 is therefore capable of obtaining the phases of reflected signals in a state in which unnecessary reflected signals from a scatterer are suppressed.

Fifth Embodiment.

In a fifth embodiment, a radar image processing device 10 that estimates the position of a scatterer present in an observation area by using interference phases $\Delta\gamma_{C1,C2}$(pixel,line) calculated by the interference phase calculating unit 37 will be described.

The radar image processing device 10 has a configuration as illustrated in FIG. 1, that is similar to that in the first embodiment.

The phase processing unit 12 has a configuration as illustrated in FIG. 2, that is similar to that in the first, second, or third embodiment.

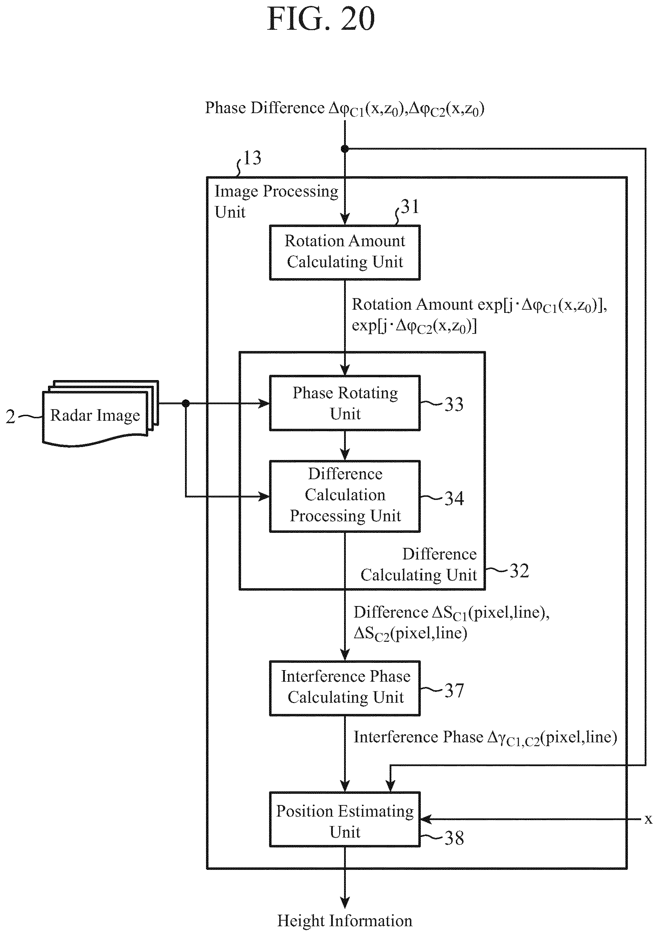

FIG. 20 is a configuration diagram illustrating the image processing unit 13 of the radar image processing device 10 according to the fifth embodiment.

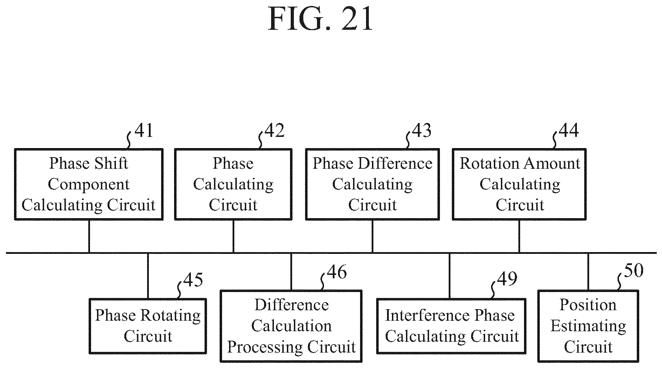

FIG. 21 is a hardware configuration diagram illustrating hardware of each of the phase processing unit 12 and the image processing unit 13.

In FIGS. 20 and 21, reference numerals that are the same as those in FIGS. 3, 4, 12, 13, 16 to 19 represent the same or corresponding components, and the description thereof will thus not be repeated.

A position estimating unit 38 is implemented by a position estimating circuit 50 illustrated in FIG. 21, for example.

The position estimating unit 38 estimate the position of a scatterer present in an observation area by using the interference phases $\Delta\gamma_{C1,C2}$(pixel,line) calculated by the interference phase calculating unit 37.

In FIG. 2, it is assumed that each of the phase shift component calculating unit 21, the phase calculating unit 22, and the phase difference calculating unit 23, which are components of the phase processing unit 12, is implemented by such dedicated hardware as illustrated in FIG. 21.

In addition, in FIG. 20, it is assumed that each of the rotation amount calculating unit 31, the phase rotating unit 33, the difference calculation processing unit 34, the interference phase calculating unit 37, and the position estimating unit 38, which are components of the image processing unit 13, is implemented by such dedicated hardware as illustrated in FIG. 21.

Specifically, the phase processing unit 12 and the image processing unit 13 are assumed to be implemented by the phase shift component calculating circuit 41, the phase calculating circuit 42, the phase difference calculating circuit 43, the rotation amount calculating circuit 44, the phase rotating circuit 45, the difference calculation processing circuit 46, the interference phase calculating circuit 49, and the position estimating circuit 50.

The components of the phase processing unit 12 and the components of the image processing unit 13 are not limited to those implemented by dedicated hardware. The phase processing unit 12 and the image processing unit 13 may be implemented by software, firmware, or a combination of software and firmware.

Next, the operation of the radar image processing device 10 will be explained.

Note that the radar image processing device 10 is similar to the radar image processing device 10 of the fourth embodiment except that the position estimating unit 38 is included, and thus, only the operation of the position estimating unit 38 will be explained here.

Herein, for convenience of explanation, a radio wave receiving point for a first radar image included in a first combination C1 will be referred to as a radio wave receiving point $P_a$, and a radio wave receiving point for a second radar image included in the first combination C1 will be referred to as a radio wave receiving point $P_b$.

In addition, a radio wave receiving point for a first radar image included in a second combination C2 will be referred to as a radio wave receiving point $P_c$, and a radio wave receiving point for a second radar image included in the second combination C2 will be referred to as a radio wave receiving point $P_d$.

The position estimating unit 38 acquires the interference phases $\Delta\gamma_{C1,C2}$(pixel,line) output from the interference phase calculating unit 37.

The position estimating unit 38 also acquires the respective phase differences $\Delta\varphi_{C1}(x,z_0)$ and $\Delta\varphi_{C2}(x,z_0)$ output from the phase difference calculating unit 23.

The position estimating unit 38 estimates the position z-hat of a scatterer present in an observation area by using the interference phases $\Delta\gamma_{C1,C2}$(pixel,line) and the respective phase differences $\Delta\varphi_1(x,z_0)$ and $\Delta\varphi_2(x,z_0)$ output from the phase difference calculating unit 23, as expressed in the following formula (29).

Because the symbol "^" cannot be typed above the character "z" in the description due to electronic filing, it is described in such a manner as z-hat herein.

$$\hat{z} = R\,sin(\theta - \alpha)\left[\frac{\lambda(B_{a,c} + B_{b,d})}{2p\pi}\{2\angle\Delta\gamma_{C1,C2} - \Delta\phi_{C1}(x,z_0) + \Delta\phi_{C2}(x,z_0)\} - \frac{cos(\theta - \alpha)\,x}{R}\right] \quad (29)$$

In the formula (29), $B_{a,c}$ represents a distance component, in a direction perpendicular to the slant-range direction, of the distance between the radio wave receiving point $P_a$ and the radio wave receiving point $P_c$.
$B_{b,d}$ represents a distance component, in a direction perpendicular to the slant-range direction, of the distance between the radio wave receiving point $P_b$ and the radio wave receiving point $P_d$.
R represents an average of the distances between each of the radio wave receiving point $P_a$, the radio wave receiving point $P_b$, the radio wave receiving point $P_c$, and the radio wave receiving point $P_q$ and the observation area.
The distance component $B_{a,c}$, the distance component $B_{b,d}$, the off-nadir angle $\theta$, and the average R of the distances are information included in the imaging parameter.
Symbol x represents the position on the inclined surface 51 associated with the position "pixel", and is output from the phase shift component calculating unit 21.
The position z-hat of the scatterer is the distance (height) in a z-axis direction from the inclined surface 51 to a signal reflecting surface of the scatterer.
The position estimating unit 38 outputs the estimated position z-hat of the scatterer to the outside of the unit.
Herein, the two radar images included in the first combination C1 and the two radar images included in the second combination C2 are different from each other. The combinations, however, are not limited thereto, and one of the two radar images included in the first combination C1 may be the same as one of the two radar images included in the second combination C2.
For example, the second radar image included in the first combination C1 and the second radar image included in the second combination C2 may be the same radar image.
In the case where the second radar image included in the first combination C1 and the second radar image included in the second combination C2 may be the same radar image, $B_{b,d}$=0 is obtained, and the formula (29) used for estimation of the position z-hat is simplified as in the following formula (30).

$$\hat{z} = R\,sin(\theta - \alpha)\left[\frac{\lambda B_{a,c}}{2p\pi}\{2\angle\Delta\gamma_{C1,C2} - \Delta\phi_{C1}(x,z_0) + \Delta\phi_{C2}(x,z_0)\} - \frac{cos(\theta - \alpha)\,x}{R}\right] \quad (30)$$

In the fifth embodiment described above, the radar image processing device 10 has a configuration including the position estimating unit 38 that estimates the position z-hat of a scatterer present in an observation area by using the interference phases $\Delta\gamma_{C1,C2}$(pixel,line) calculated by the interference phase calculating unit 37. The radar image processing device 10 is therefore capable of obtaining the position of a scatterer present in an observation area.
Note that the embodiments of the present invention can be freely combined, any components in the embodiments can be modified, and any components in the embodiments can be omitted within the scope of the invention of the present application.

INDUSTRIAL APPLICABILITY

The present invention is suitable for a radar image processing device and a radar image processing method that calculate differences between a plurality of pixels included in a first radar image and a plurality of pixels obtained by phase rotation included in a second radar image.

REFERENCE SIGNS LIST

1: radar, 2: radar image group, 3: imaging parameter group, 10: radar image processing device, 11: radar image acquiring unit, 12: phase processing unit, 13: image processing unit, 21: phase shift component calculating unit, 22: phase calculating unit, 23: phase difference calculating unit, 31: rotation amount calculating unit, 32: difference calculating unit, 33: phase rotating unit, 34: difference calculation processing unit, 35: image combining unit, 36: extraction image calculating unit, 37: interference phase calculating unit, 38: position estimating unit, 41: phase shift component calculating circuit, 42: phase calculating circuit, 43: phase difference calculating circuit, 44: rotation amount calculating circuit, 45: phase rotating circuit, 46: difference calculation processing circuit, 47: image combining circuit, 48: extraction image calculating circuit, 49: interference phase calculating circuit, 50: position estimating circuit, 51: inclined surface, 52: parallel surface, 61: memory, 62: processor

**Claims**

1. A radar image processing device (10), comprising:

a phase shift component calculating unit (21) for calculating a phase shift component $\varphi(x)$ of complex image pixels at the position x, in a first axis direction, denoted as x-axis direction, on a two-dimensional inclined surface included in a first radar image and a second radar image,

each of the first and second radar image being a radar image showing an intensity distribution of radio waves emitted by a radar (1), then reflected by an observation area, and received by the radar (1), a plurality of pixels included in the first radar image and a plurality of pixels included in the second radar image each having a complex pixel value, represented by an amplitude and a phase, the first axis being an axis of the inclined surface (51) inclined with respect to a ground-range direction, a second axis of the inclined surface being an azimuth direction;

a phase calculating unit (22) for calculating a phase $\rho(z_0)$ on a parallel surface (52), the parallel surface (52) being a surface parallel to the inclined surface (51), and at a distance of $z_0$ from the inclined surface (51), with respect to the inclined surface (51), $\rho(z_0)$ being dependent on the distance $z_0$ between the inclined surface (51) and the parallel surface (52), the distance $z_0$ being a parameter set in advance by a user; and

a phase difference calculating unit (23) for calculating a phase difference $\Delta\varphi(x,z_0)$ in each of a plurality of reflected signals present in each of the pixels included in the first and second radar images, the phase difference $\Delta\varphi(x,z_0)$ being a difference between phases with respect to the respective radio wave receiving points, said phase difference $\Delta\varphi(x,z_0)$ being calculated by forming a sum of the phase shift component ($\varphi(x)$ calculated by the phase shift component calculating unit (21) and the phase $\rho(z_0)$ calculated by the phase calculating unit (22);

a rotation amount calculating unit (31) for calculating each of phase rotation amounts $\exp[j\cdot\Delta\varphi(x,z_0)]$ in a plurality of pixels included in the second radar image from each phase difference $\Delta\varphi(x,z_0)$ calculated by the phase difference calculating unit (23); and

a difference calculating unit (32) for rotating phases in a plurality of pixels included in the second radar image on a basis of the respective rotation amounts $\exp[j\cdot\Delta\varphi(x,z0)]$ calculated by the rotation amount calculating unit (31), and calculating a difference between pixel values of pixels being complex numbers at corresponding pixel positions among a plurality of pixels included in the first radar image and a plurality of pixels resulting from phase rotation included in the second radar image.

2. The radar image processing device (10) according to claim 1, wherein

a radar image group includes two or more radar images capturing one observation area from radio wave receiving points different from each other,

the phase shift component calculating unit (21) calculates the phase shift component in the first axis direction on the inclined surface for each combination of two radar images included in the radar image group, one of the radar images included in each combination being the first radar image, the other of the radar images included in each combination being the second radar image,

the phase difference calculating unit (23) calculates, for each combination of two radar images, the phase difference in each of the plurality of reflected signals from the phase shift components calculated for each combination by the phase shift component calculating unit and the phases calculated by the phase calculating unit,

the rotation amount calculating unit (31) calculates, for each combination of two radar images, each of the phase rotation amounts of the plurality of pixels included in the second radar image from the respective phase differences calculated for each combination by the phase difference calculating unit,

the difference calculating unit (32) rotates, for each combination of two radar images, the phases of the plurality of pixels included in the second radar image on a basis of the respective rotation amounts calculated for each combination by the rotation amount calculating unit, and calculates a difference between pixel values of pixels at corresponding pixel positions among the plurality of pixels included in the first radar image and the plurality of pixels resulting from the phase rotation included in the second radar image, and

the radar image processing device includes

an image combining unit (35) for combining differences at corresponding pixels position among the respective differences calculated for each combination by the difference calculating unit (32).

3. The radar image processing device (10) according to claim 2, comprising:
an extraction image calculating unit (36) for calculating an image in which the plurality of reflected signals are extracted, from pixel values of the plurality of pixels included in the first radar image and the respective differences obtained by the combining by the image combining unit (35).

4. The radar image processing device (10) according to claim 1, wherein

a first combination includes any two radar images among three or more radar images capturing one observation area from radio wave receiving points different from each other, and a second combination includes two radar images among the three or more radar images, at least one of the two radar images in the second combination being different from the two radar images included in the first combination,
the phase shift component calculating unit (21) calculates, for each of the first and second combination, the phase shift component in the first axis direction on the inclined surface, one of radar images included in each combination being the first radar image, the other of the radar images included in each combination being the second radar image,
the phase difference calculating unit (23) calculates, for each of the first and second combinations, the phase difference in each of the plurality of reflected signals from the phase shift components calculated for each combination by the phase shift component calculating unit (21) and the phases calculated by the phase calculating unit (22),
the rotation amount calculating unit (31) calculates, for each of the first and second combinations, each of the phase rotation amounts of the plurality of pixels included in the second radar image from the respective phase differences calculated for each combination by the phase difference calculating unit (23),
the difference calculating unit (32) rotates, for each of the first and second combinations, the phases of the plurality of pixels included in the second radar image on a basis of the respective rotation amounts calculated for each combination by the rotation amount calculating unit (31), and calculates a difference between pixel values of pixels at corresponding pixel positions among the plurality of pixels included in the first radar image and the plurality of pixels resulting from the phase rotation included in the second radar image, and
the radar image processing device includes an interference phase calculating unit (37) for calculating, as interference phases, phases at respective pixel positions from the differences at the respective pixel positions calculated for the first combination by the difference calculating unit (32) and the differences at the respective pixel positions calculated for the second combination by the difference calculating unit (32).

5. The radar image processing device (10) according to claim 4, comprising:
a position estimating unit (38) for estimating a position of a scatterer present in the observation area by using the interference phases calculated by the interference phase calculating unit (37).

6. A radar image processing method, comprising:

calculating a phase shift component $\varphi(x)$ of complex image pixels at the position x, in a first axis direction, denoted as x-axis direction, on a two-dimensional inclined surface included in a first radar image and a second radar image,

each of the first and second radar image being a radar image showing an intensity distribution of radio waves emitted by a radar (1), then reflected by an observation area, and received by the radar (1), a plurality of pixels included in the first radar image and a plurality of pixels included in the second radar image each having a complex pixel value, represented by an amplitude and a phase,
the first axis being an axis of the inclined surface (51) inclined with respect to a ground-range direction, a second axis of the inclined surface being an azimuth direction,

calculating a phase $\rho(z_0)$ on a parallel surface (52), the parallel surface (52) being a surface parallel to the inclined surface (51), and at a distance $z_0$ from the inclined surface, with respect to the inclined surface (51), $\rho(z_0)$ being dependent on the distance $z_0$ between the inclined surface (51) and the parallel surface (52),
the distance $z_0$ being a parameter set in advance by the user; and
calculating a phase difference $\Delta\varphi(x,z0)$ in each of a plurality of reflected signals present in each of the pixels included in the first and second radar images, the phase difference being a difference between phases with respect to the respective radio wave receiving points, said phase difference $\Delta\varphi(x,z0)$ being calculated by forming a sum of the phase shift component $\varphi(x)$ calculated and the phase $\rho(z_0)$ calculated;

calculating each of phase rotation amounts $\exp[j\cdot\Delta\varphi(x,z0)]$ in a plurality of pixels included in the second radar image from each phase difference $\Delta\varphi(x,z_0)$ calculated; and

rotating phases in a plurality of pixels included in the second radar image on a basis of the respective rotation amounts $\exp[j\cdot\Delta\varphi(x,z0)]$ calculated, and calculating a difference between pixel values of pixels being complex numbers at corresponding pixel positions among a plurality of pixels included in the first radar image and a plurality of pixels resulting from phase rotation included in the second radar image.

**Patentansprüche**

1. Radarbildverarbeitungsvorrichtung (10), umfassend:

   eine Phasenverschiebungskomponenten-Berechnungseinheit (21) zum Berechnen einer Phasenverschiebungskomponente $\phi(x)$ komplexer Bildpixel an der Position x in einer ersten Achsenrichtung, die als x-Achsenrichtung bezeichnet wird, auf einer zweidimensionalen geneigten Oberfläche, die in einem ersten Radarbild und einem zweiten Radarbild enthalten ist,
   wobei jedes der ersten und zweiten Radarbilder ein Radarbild ist, das eine Intensitätsverteilung von Funkwellen zeigt, die von einem Radar (1) emittiert, dann von einem Beobachtungsgebiet reflektiert und vom Radar (1) empfangen werden, wobei eine Vielzahl von Pixeln, die in dem ersten Radarbild enthalten sind, und eine Vielzahl von Pixeln, die in dem zweiten Radarbild enthalten sind, jeweils einen komplexen Pixelwert haben, der durch eine Amplitude und eine Phase dargestellt wird,
   wobei die erste Achse eine Achse der geneigten Oberfläche (51) ist, die in Bezug auf eine Boden-Entfernungsrichtung geneigt ist, und eine zweite Achse der geneigten Oberfläche eine Azimut-Richtung ist;
   eine Phasenberechnungseinheit (22) zum Berechnen einer Phase $\rho(z_0)$ auf einer parallelen Oberfläche (52), wobei die parallele Oberfläche (52) eine zur geneigten Oberfläche (51) parallele Oberfläche ist und sich in einem Abstand $z_0$ von der geneigten Oberfläche (51) befindet, bezogen auf die geneigte Oberfläche (51), wobei $\rho(z_0)$ von dem Abstand $z_0$ zwischen der geneigten Fläche (51) und der parallelen Fläche (52) abhängt, wobei der Abstand z0 ein von einem Benutzer vorab festgelegter Parameter ist; und
   eine Phasendifferenz-Berechnungseinheit (23) zum Berechnen einer Phasendifferenz $\Delta\phi(x,z_0)$ in jedem einer Vielzahl von reflektierten Signalen, die in jedem der Pixel vorhanden sind, die in dem ersten und dem zweiten Radarbild enthalten sind, wobei die Phasendifferenz $\Delta\phi(x,z_0)$ eine Differenz zwischen Phasen in Bezug auf die jeweiligen Funkwellenempfangspunkte ist, wobei die Phasendifferenz $\Delta\phi(x,z_0)$ durch Bilden einer Summe der von der Phasenverschiebungskomponenten-Berechnungseinheit (21) berechneten Phasenverschiebungskomponente $\phi(x)$ und der von der Phasenberechnungseinheit (22) berechneten Phase $\rho(z_0)$ berechnet wird;
   eine Drehbetrag-Berechnungseinheit (31) zum Berechnen jedes der Phasendrehbeträge $\exp[j\cdot\Delta\phi(x,z_0)]$ in einer Vielzahl von Pixeln, die in dem zweiten Radarbild enthalten sind, aus jeder Phasendifferenz $\Delta\phi(x,z_0)$, die durch die Phasendifferenz-Berechnungseinheit (23) berechnet wird; und
   eine Differenzberechnungseinheit (32) zum Drehen von Phasen in einer Vielzahl von Pixeln, die in dem zweiten Radarbild enthalten sind, auf der Grundlage der jeweiligen Drehbeträge $\exp[j\cdot\Delta\phi(x,z_0)]$, die von der Drehbetragsberechnungseinheit (31) berechnet werden, und Berechnen einer Differenz zwischen Pixelwerten von Pixeln, die komplexe Zahlen an entsprechenden Pixelpositionen unter einer Vielzahl von Pixeln sind, die in dem ersten Radarbild enthalten sind, und einer Vielzahl von Pixeln, die sich aus der Phasenrotation ergeben und in dem zweiten Radarbild enthalten sind.

2. Radarverarbeitungsvorrichtung (10) nach Anspruch 1, wobei

   eine Radarabbildgruppe zwei oder mehr Radarabbilder enthält, die ein Beobachtungsgebiet von voneinander verschiedenen Funkwellenempfangspunkten erfassen,
   die Phasenverschiebungskomponenten-Berechnungseinheit (21) die Phasenverschiebungskomponente in der ersten Achsrichtung auf der geneigten Oberfläche für jede Kombination von zwei Radarbildern berechnet, die in der Radarabbildgruppe enthalten sind, wobei eines der in jeder Kombination enthaltenen Radarbilder das erste Radarbild ist und das andere der in jeder Kombination enthaltenen Radarbilder das zweite Radarbild ist,
   die Phasenunterschied-Berechnungseinheit (23) für jede Kombination von zwei Radarbildern den Phasenunterschied in jedem der mehreren reflektierten Signale aus den für jede Kombination von der Phasenverschiebung-Komponentenberechnungseinheit berechneten Phasenverschiebungskomponenten und den von der Phasenberechnungseinheit berechneten Phasen berechnet,

die Drehbetragsberechnungseinheit (31) für jede Kombination von zwei Radarbildern jeden der Phasendrehbeträge von der Vielzahl von Pixeln, die in dem zweiten Radarbild enthalten sind, aus den jeweiligen Phasendifferenzen berechnet, die für jede Kombination durch die Phasendifferenz-Berechnungseinheit berechnet werden, die Differenzberechnungseinheit (32) für jede Kombination von zwei Radarbildern die Phasen der Vielzahl von Pixeln, die in dem zweiten Radarbild enthalten sind, auf der Grundlage der jeweiligen Drehbeträge dreht, die für jede Kombination durch die Drehbetragsberechnungseinheit berechnet werden, und eine Differenz zwischen Pixelwerten von Pixeln an entsprechenden Pixelpositionen unter der Vielzahl von Pixeln, die in dem ersten Radarbild enthalten sind, und der Vielzahl von Pixeln berechnet, die sich aus der Phasendrehung ergeben, die in dem zweiten Radarbild enthalten ist, und

die Bildverarbeitungsvorrichtung enthält

eine Bildkombiniereinheit (35) zum Kombinieren von Unterschieden an entsprechenden Pixelpositionen unter den jeweiligen Unterschieden, die für jede Kombination durch die Differenzberechnungseinheit (32) berechnet werden.

3. Radarverarbeitungsvorrichtung (10) nach Anspruch 2, umfassend:
eine Extraktion-Bildberechnungseinheit (36) zum Berechnen eines Bildes, in dem die Vielzahl von reflektierten Signalen extrahiert sind, aus Pixelwerten der Vielzahl von Pixeln, die in dem ersten Radarbild enthalten sind, und den jeweiligen Differenzen, die durch die Kombination durch die Bildkombiniereinheit (35) erhalten werden.

4. Radarverarbeitungsvorrichtung (10) nach Anspruch 1, wobei

eine erste Kombination zwei beliebige Radarbilder aus drei oder mehr Radarbildern umfasst, die ein Beobachtungsgebiet von voneinander verschiedenen Funkwellenempfangspunkten erfasst, und eine zweite Kombination zwei Radarbilder aus den drei oder mehr Radarbildern umfasst, wobei mindestens eines der beiden Radarbilder in der zweiten Kombination sich von den beiden Radarbildern in der ersten Kombination unterscheidet,

die Phasenverschiebungskomponenten-Berechnungseinheit (21) für jede der ersten und zweiten Kombinationen die Phasenverschiebungskomponente in der ersten Achsenrichtung auf der geneigten Oberfläche berechnet, wobei eines der in jeder Kombination enthaltenen Radarbilder das erste Radarbild ist und das andere der in jeder Kombination enthaltenen Radarbilder das zweite Radarbild ist,

die Phasendifferenz-Berechnungseinheit (23) für jede der ersten und zweiten Kombinationen die Phasendifferenz in jedem der Vielzahl von reflektierten Signalen aus den Phasenverschiebungskomponenten, die für jede Kombination durch die Phasenverschiebungskomponenten-Berechnungseinheit (21) berechnet werden, und den Phasen, die durch die Phasenberechnungseinheit (22) berechnet werden, berechnet,

die Drehbetrags-Berechnungseinheit (31) für jede der ersten und zweiten Kombinationen jeden der Phasendrehbeträge der Vielzahl von Pixeln, die in dem zweiten Radarbild enthalten sind, aus den jeweiligen Phasendifferenzen berechnet, die für jede Kombination durch die Phasendifferenz-Berechnungseinheit (23) berechnet werden,

die Differenzberechnungseinheit (32) für jede der ersten und zweiten Kombinationen die Phasen der Vielzahl von Pixeln dreht, die in dem zweiten Radarbild enthalten sind, auf der Grundlage der jeweiligen Drehbeträge, die für jede Kombination von der Drehbetrags-Berechnungseinheit (31) berechnet werden, und eine Differenz zwischen den Pixelwerten von Pixeln an entsprechenden Pixelpositionen unter der Vielzahl von Pixeln, die in dem ersten Radarbild enthalten sind, und der Vielzahl von Pixeln berechnet, die sich aus der Phasendrehung ergeben, die in dem zweiten Radarbild enthalten ist, und

die Radarbildverarbeitungsvorrichtung eine Interferenzphasen-Berechnungseinheit (37) umfasst, zum Berechnen von Phasen an jeweiligen Pixelpositionen als Interferenzphasen aus den für die erste Kombination von der Differenzberechnungseinheit (32) berechneten Differenzen an den jeweiligen Pixelpositionen und den für die zweite Kombination von der Differenzberechnungseinheit (32) berechneten Differenzen an den jeweiligen Pixelpositionen.

5. Radarverarbeitungsvorrichtung (10) nach Anspruch 4, umfassend:
eine Position-Ermittlungseinheit (38) zum Schätzen einer Position eines im Beobachtungsgebiet vorhandenen Streuers unter Verwendung der von der Interferenzphasen-Berechnungseinheit (37) berechneten Interferenzphasen.

6. Radarbildverarbeitungsverfahren, umfassend:

Berechnen einer Phasenverschiebungskomponente $\phi(x)$ komplexer Bildpixel an der Position x in einer ersten Achsrichtung, bezeichnet als x-Achsenrichtung, auf einer zweidimensionalen geneigten Oberfläche, die in einem ersten Radarbild und einem zweiten Radarbild enthalten ist,

wobei jedes der ersten und zweiten Radarbilder ein Radarbild ist, das eine Intensitätsverteilung von Funkwellen zeigt, die von einem Radar (1) emittiert, dann von einem Beobachtungsgebiet reflektiert und vom Radar (1) empfangen werden, wobei eine Vielzahl von Pixeln, die in dem ersten Radarbild enthalten sind, und eine Vielzahl von Pixeln, die in dem zweiten Radarbild enthalten sind, jeweils einen komplexen Pixelwert haben, der durch eine Amplitude und eine Phase dargestellt wird,

wobei die erste Achse eine Achse der geneigten Oberfläche (51) ist, die in Bezug auf eine Boden-Entfernungsrichtung geneigt ist, und eine zweite Achse der geneigten Oberfläche eine Azimut-Richtung ist,

Berechnen einer Phase $\rho(z_0)$ auf einer parallelen Oberfläche (52), wobei die parallele Oberfläche (52) eine zur geneigten Oberfläche (51) parallele geneigte Oberfläche ist, die sich in einem Abstand $z_0$ von der geneigten Oberfläche befindet, wobei $\rho(z_0)$ in Bezug auf die geneigte Oberfläche (51) von dem Abstand z0 zwischen der geneigten Oberfläche (51) und der parallelen Oberfläche (52) abhängt,

wobei der Abstand $z_0$ ein vom Benutzer vorab festgelegter Parameter ist; und

Berechnen einer Phasendifferenz $\Delta\phi(x,z0)$ in jedem einer Vielzahl von reflektierten Signalen, die in jedem der Pixel vorhanden sind, die in dem ersten und dem zweiten Radarbild enthalten sind, wobei die Phasendifferenz eine Differenz zwischen Phasen in Bezug auf die jeweiligen Funkwellenempfangspunkte ist, wobei die Phasendifferenz $\Delta\phi(x,z0)$ berechnet wird, indem eine Summe der berechneten Phasenverschiebungskomponente $\phi(x)$ und der berechneten Phase $\rho(z_0)$ gebildet wird;

Berechnen jedes Phasendrehbetrags $\exp[j \cdot \Delta\phi(x,z0)]$ in einer Vielzahl von Pixeln, die in dem zweiten Radarbild enthalten sind, aus jeder berechneten Phasendifferenz $\Delta\phi(x,z0)$; und

Drehphasen in einer Vielzahl von Pixeln, die in dem zweiten Radarbild enthalten sind, auf der Grundlage der jeweiligen berechneten Drehbeträge $\exp[j \cdot \Delta\phi(x,z0)]$ zu drehen und eine Differenz zwischen Pixelwerten von Pixeln, die komplexe Zahlen an entsprechenden Pixelpositionen unter einer Vielzahl von Pixeln sind, die in dem ersten Radarbild enthalten sind, und einer Vielzahl von Pixeln, die sich aus der Phasendrehung ergeben, die in dem zweiten Radarbild enthalten sind, zu berechnen.

## Revendications

1. Dispositif de traitement d'images radar (10), comprenant :

une unité de calcul de composante de déphasage (21) pour calculer une composante de déphasage $\phi(x)$ de pixels d'image complexe à la position x, dans une première direction d'axe, désignée direction d'axe x, sur une surface inclinée bidimensionnelle incluse dans une première image radar et une seconde image radar, chacune des première et seconde images radar étant une image radar montrant une distribution d'intensité d'ondes radio émises par un radar (1), puis réfléchies par une zone d'observation, et reçues par le radar (1), une pluralité de pixels inclus dans la première image radar et une pluralité de pixels inclus dans la seconde image radar présentant chacun une valeur de pixel complexe, représentée par une amplitude et une phase, le premier axe étant un axe de la surface inclinée (51) qui est inclinée par rapport à une direction de portée au sol, un second axe de la surface inclinée étant une direction d'azimut ;

une unité de calcul de phase (22) pour calculer une phase $\rho(z_0)$ sur une surface parallèle (52), la surface parallèle (52) étant une surface parallèle à la surface inclinée (51), et à une distance de $z_0$ de la surface inclinée (51), par rapport à la surface inclinée (51), $\rho(z_0)$ dépendant de la distance $z_0$ entre la surface inclinée (51) et la surface parallèle (52), la distance $z_0$ étant un paramètre défini à l'avance par un utilisateur ; et

une unité de calcul de différence de phase (23) pour calculer une différence de phase $\Delta\phi(x,z_0)$ dans chacun d'une pluralité de signaux réfléchis présents dans chacun des pixels inclus dans les première et seconde images radar, la différence de phase $\Delta\phi(x,z_0)$ étant une différence entre des phases par rapport aux points de réception d'ondes radio respectifs, ladite différence de phase $\Delta\phi(x,z_0)$ étant calculée en formant une somme de la composante de décalage de phase $\phi(x)$ calculée par l'unité de calcul de composante de décalage de phase (21) et de la phase $\rho(z_0)$ calculée par l'unité de calcul de phase (22) ;

une unité de calcul de quantité de rotation (31) pour calculer chacune de quantités de rotation de phase $\exp[j \cdot \Delta\phi(x,z_0)]$ dans une pluralité de pixels inclus dans la seconde image radar à partir de chaque différence de phase $\Delta\phi(x,z_0)$ calculée par l'unité de calcul de différence de phase (23) ; et

une unité de calcul de différence (32) pour faire tourner des phases dans une pluralité de pixels inclus dans la seconde image radar sur la base des quantités de rotation respectives $\exp[j \cdot \Delta\phi(x,z0)]$ calculées par l'unité de calcul de quantité de rotation (31), et calculer une différence entre des valeurs de pixel de pixels étant des nombres complexes à des positions de pixel correspondantes parmi une pluralité de pixels inclus dans la première image radar et une pluralité de pixels résultant d'une rotation de phase inclus dans la seconde image radar.

2. Dispositif de traitement d'images radar (10) selon la revendication 1, dans lequel

un groupe d'images radar inclut deux images radar ou plus capturant une zone d'observation à partir de points de réception d'ondes radio différents les uns des autres,

l'unité de calcul de composante de déphasage (21) calcule la composante de déphasage dans la première direction d'axe sur la surface inclinée pour chaque combinaison de deux images radar incluses dans le groupe d'images radar, une certaine des images radar incluses dans chaque combinaison étant la première image radar, l'autre des images radar incluses dans chaque combinaison étant la seconde image radar,

l'unité de calcul de différence de phase (23) calcule, pour chaque combinaison de deux images radar, la différence de phase dans chacun de la pluralité de signaux réfléchis à partir des composantes de déphasage calculées pour chaque combinaison par l'unité de calcul de composante de déphasage et des phases calculées par l'unité de calcul de phase,

l'unité de calcul de quantité de rotation (31) calcule, pour chaque combinaison de deux images radar, chacune des quantités de rotation de phase de la pluralité de pixels inclus dans la seconde image radar à partir des différences de phase respectives calculées pour chaque combinaison par l'unité de calcul de différence de phase,

l'unité de calcul de différence (32) fait tourner, pour chaque combinaison de deux images radar, les phases de la pluralité de pixels inclus dans la seconde image radar sur la base des quantités de rotation respectives calculées pour chaque combinaison par l'unité de calcul de quantité de rotation, et calcule une différence entre des valeurs de pixel de pixels à des positions de pixel correspondantes parmi la pluralité de pixels inclus dans la première image radar et la pluralité de pixels résultant de la rotation de phase inclus dans la seconde image radar, et

le dispositif de traitement d'images radar inclut

une unité de combinaison d'images (35) pour combiner des différences à la position de pixel correspondante parmi les différences respectives calculées pour chaque combinaison par l'unité de calcul de différence (32).

3. Dispositif de traitement d'images radar (10) selon la revendication 2, comprenant :

une unité de calcul d'image d'extraction (36) pour calculer une image dans laquelle la pluralité de signaux réfléchis sont extraits, à partir de valeurs de pixel de la pluralité de pixels inclus dans la première image radar et des différences respectives obtenues par la combinaison par l'unité de combinaison d'images (35).

4. Dispositif de traitement d'images radar (10) selon la revendication 1, dans lequel

une première combinaison inclut deux images radar quelconques parmi trois images radar ou plus capturant une certaine zone d'observation à partir de points de réception d'ondes radio différents les uns des autres, et une seconde combinaison inclut deux images radar parmi les trois images radar ou plus, au moins une certaines des deux images radar dans la seconde combinaison étant différente des deux images radar incluses dans la première combinaison,

l'unité de calcul de composante de déphasage (21) calcule, pour chacune de la première et de la seconde combinaison, la composante de déphasage dans la première direction d'axe sur la surface inclinée, une certaine des images radar incluses dans chaque combinaison étant la première image radar, l'autre des images radar incluses dans chaque combinaison étant la seconde image radar,

l'unité de calcul de différence de phase (23) calcule, pour chacune des première et seconde combinaisons, la différence de phase dans chacun de la pluralité de signaux réfléchis à partir des composantes de déphasage calculées pour chaque combinaison par l'unité de calcul de composante de déphasage (21) et des phases calculées par l'unité de calcul de phase (22),

l'unité de calcul de quantité de rotation (31) calcule, pour chacune des première et seconde combinaisons, chacune des quantités de rotation de phase de la pluralité de pixels inclus dans la seconde image radar à partir des différences de phase respectives calculées pour chaque combinaison par l'unité de calcul de différence de phase (23),

l'unité de calcul de différence (32) fait tourner, pour chacune des première et seconde combinaison, les phases de la pluralité de pixels inclus dans la seconde image radar sur la base des quantités de rotation respectives calculées pour chaque combinaison par l'unité de calcul de quantité de rotation (31), et calcule une différence entre des valeurs de pixel de pixels à des positions de pixel correspondantes parmi la pluralité de pixels inclus dans la première image radar et la pluralité de pixels résultant de la rotation de phase inclus dans la seconde image radar, et

le dispositif de traitement d'images radar inclut une unité de calcul de phase d'interférence (37) pour calculer, en tant que phases d'interférence, des phases à des positions de pixel respectives à partir des différences aux positions de pixel respectives calculées pour la première combinaison par l'unité de calcul de différence (32) et des différences aux positions de pixel respectives calculées pour la seconde combinaison par l'unité de calcul de différence (32).

5. Dispositif de traitement d'images radar (10) selon la revendication 4, comprenant :
une unité d'estimation de position (38) pour estimer une position d'un diffuseur présent dans la zone d'observation en utilisant les phases d'interférence calculées par l'unité de calcul de phase d'interférence (37).

6. Procédé de traitement d'images radar, comprenant les étapes consistant à :

calculer une composante de déphasage $\phi(x)$ de pixels d'image complexe à la position x, dans une première direction d'axe, désignée direction d'axe x, sur une surface inclinée bidimensionnelle incluse dans une première image radar et une seconde image radar,
chacune des première et seconde images radar étant une image radar montrant une distribution d'intensité d'ondes radio émises par un radar (1), puis réfléchies par une zone d'observation, et reçues par le radar (1), une pluralité de pixels inclus dans la première image radar et une pluralité de pixels inclus dans la seconde image radar présentant chacun une valeur de pixel complexe, représentée par une amplitude et une phase,
le premier axe étant un axe de la surface inclinée (51) qui est inclinée par rapport à une direction de portée au sol, un second axe de la surface inclinée étant une direction d'azimut,
calculer une phase $\rho(z_0)$ sur une surface parallèle (52), la surface parallèle (52) étant une surface parallèle à la surface inclinée (51), et à une distance $z_0$ de la surface inclinée, par rapport à la surface inclinée (51), $\rho(z_0)$ dépendant de la distance $z_0$ entre la surface inclinée (51) et la surface parallèle (52),
la distance $z_0$ étant un paramètre défini à l'avance par l'utilisateur ; et
calculer une différence de phase $\Delta\phi(x,z0)$ dans chacun d'une pluralité de signaux réfléchis présents dans chacun des pixels inclus dans les première et seconde images radar, la différence de phase étant une différence entre des phases par rapport aux points de réception d'ondes radio respectifs, ladite différence de phase $\Delta\phi(x,z0)$ étant calculée en formant une somme de la composante de déphasage $\phi(x)$ calculée et de la phase $\rho(z_0)$ calculée ;
calculer chacune des quantités de rotation de phase $\exp[j\cdot\Delta\phi(x,z0)]$ dans une pluralité de pixels inclus dans la seconde image radar à partir de chaque différence de phase $\Delta\phi(x,z_0)$ calculée ; et
faire tourner des phases dans une pluralité de pixels inclus dans la seconde image radar sur la base des quantités de rotation respectives $\exp[j\cdot\Delta\phi(x,z0)]$ calculées, et calculer une différence entre des valeurs de pixel de pixels étant des nombres complexes à des positions de pixel correspondantes parmi une pluralité de pixels inclus dans la première image radar et une pluralité de pixels résultant d'une rotation de phase inclus dans la seconde image radar.

# FIG. 1

Radar Image Processing Device — 10

Radar Image — 1
Radar Image — 2
Imaging Parameter — 3

Radar Image Acquiring Unit — 11

Imaging Parameter Group 3

Inclination Angle α

Distance $z_0$

Radar Image Group 2

Phase Processing Unit — 12

Phase Difference

Image Processing Unit — 13

Suppressed Image

# FIG. 2

Phase Processing Unit — 12

Imaging Parameter — 3

Phase Shift Component Calculating Unit — 21

Phase Shift Component φ(x)

Inclination Angle α

Distance $z_0$

Phase Calculating Unit — 22

Phase $\rho(z_0)$

Phase Difference Calculating Unit — 23

Phase Difference $\Delta\varphi(x,z_0)$

# FIG. 3

Phase Difference $\Delta\varphi(x,z_0)$

Image Processing Unit ~13

Rotation Amount Calculating Unit ~31

Rotation Amount $\exp[j\cdot\Delta\varphi(x,z_0)]$

2~ Radar Image

Phase Rotating Unit ~33

Difference Calculation Processing Unit ~34

Difference Calculating Unit ~32

Difference $\Delta S(pixel,line)$

Suppressed Image

# FIG. 4

Phase Shift Component Calculating Circuit ~41

Phase Calculating Circuit ~42

Phase Difference Calculating Circuit ~43

Rotation Amount Calculating Circuit ~44

Phase Rotating Circuit ~45

Difference Calculation Processing Circuit ~46

# FIG. 5

Memory [61]

Processor [62]

# FIG. 6

Start

↓

Phase Shift Component Calculating Unit
Acquires Imaging Parameter Group
And Inclination Angle α — ST1

↓

Phase Calculating Unit Acquires Imaging
Parameter Group, Inclination Angle α,
And Distance $z_0$ — ST2

↓

Phase Shift Component Calculating Unit
Calculates Phase Shift Component $\varphi(x)$ — ST3

↓

Phase Calculating Unit Calculates Phase $\rho(z_0)$
On Parallel Surface With Respect
To Inclined Surface — ST4

↓

Phase Difference Calculating Unit
Calculates Each Phase Difference $\Delta\varphi(x,z_0)$ — ST5

↓

End

# FIG. 7

Height Direction

$B_{1,2}$

$P_1$

$P_2$

Slant-Range Direction

Slant-Range Direction

$\theta$

R

z

$z_0$

Parallel Surface 52

Inclined Surface 51

$\alpha$

Grand-Range Direction

x

$\alpha$

Grand-Range Direction

1 Pixel

Sw

Range Of Radar Image

# FIG. 8

Height Direction

$B_{1,2}$

$P_1$

$P_2$

Slant-Range Direction

Slant-Range Direction

$\theta$

z

$\frac{Sw}{2}\sin\theta$

Near Range

$\Delta sl \times$ pixel

sl

x

$\Delta sl$

$\alpha$

1 Pixel

Sw

Range Of Radar Image

Center Position Of Radar Image

Grand-Range Direction

# FIG. 9

```
┌──────────┐
│  Start   │
└──────────┘
      │
      ▼
┌─────────────────────────────────────────┐
│ Rotation Amount Calculating Unit Calculates │
│ Each Of Phase Rotation Amounts In Plurality │──ST11
│  Of Pixels Included In Second Radar Image   │
└─────────────────────────────────────────┘
      │
      ▼
┌─────────────────────────────────────────┐
│ Phase Rotating Unit Rotates Phases In Plurality │──ST12
│   Of Pixels Included In Second Radar Image  │
└─────────────────────────────────────────┘
      │
      ▼
┌─────────────────────────────────────────┐
│   Difference Calculation Processing Unit  │──ST13
│ Calculates Each Difference ΔS(pixel,line) │
└─────────────────────────────────────────┘
      │
      ▼
┌──────────┐
│   End    │
└──────────┘
```

# FIG. 10

$P_2$

$P_1$

null Point

Slant-Range Direction

Slant-Range Direction

1

3

2

Equiphase Surface

# FIG. 11

# FIG. 12

Phase Difference $\Delta\varphi_i(x,z_0)$

**13**

Image Processing Unit

**31**

Rotation Amount Calculating Unit

Rotation Amount $\exp[j\cdot\Delta\varphi_i(x,z_0)]$

**2** — Radar Image

Phase Rotating Unit — **33**

Difference Calculation Processing Unit — **34**

Difference Calculating Unit — **32**

Difference $\Delta S_i(pixel,line)$

Weight Parameter $w_i$ — Image Combining Unit — **35**

Suppressed Image

# FIG. 13

**41** Phase Shift Component Calculating Circuit

**42** Phase Calculating Circuit

**43** Phase Difference Calculating Circuit

**44** Rotation Amount Calculating Circuit

**45** Phase Rotating Circuit

**46** Difference Calculation Processing Circuit

**47** Image Combining Circuit

# FIG. 14

# FIG. 15

# FIG. 16

Phase Difference $\Delta\varphi_i(x,z_0)$

**13**
Image Processing Unit

**31**
Rotation Amount Calculating Unit

Rotation Amount $\exp[j\cdot\Delta\varphi_i(x,z_0)]$

**2** Radar Image

Phase Rotating Unit **33**

Difference Calculation Processing Unit **34**

Difference Calculating Unit **32**

Difference $\Delta S_i(\text{pixel,line})$

**35**
Weight Parameter $w_i$ → Image Combining Unit

**36**
Extraction Image Calculating Unit

Difference Resulting from Combining $S_{sup}(\text{pixel,line})$

Suppressed Image

Extraction Image

# FIG. 17

**41** Phase Shift Component Calculating Circuit

**42** Phase Calculating Circuit

**43** Phase Difference Calculating Circuit

**44** Rotation Amount Calculating Circuit

**45** Phase Rotating Circuit

**46** Difference Calculation Processing Circuit

**47** Image Combining Circuit

**48** Extraction Image Calculating Circuit

# FIG. 18

Phase Difference $\Delta\varphi_{C1}(x,z_0)$, $\Delta\varphi_{C2}(x,z_0)$

13

Image Processing Unit

31

Rotation Amount Calculating Unit

Rotation Amount $\exp[j \cdot \Delta\varphi_{C1}(x,z_0)]$, $\exp[j \cdot \Delta\varphi_{C2}(x,z_0)]$

2 — Radar Image

Phase Rotating Unit — 33

Difference Calculation Processing Unit — 34

Difference Calculating Unit — 32

Difference $\Delta S_{C1}(pixel,line)$, $\Delta S_{C2}(pixel,line)$

Interference Phase Calculating Unit — 37

Interference Phase $\Delta\gamma_{C1,C2}(pixel,line)$

# FIG. 19

| Phase Shift Component Calculating Circuit 41 | Phase Calculating Circuit 42 | Phase Difference Calculating Circuit 43 | Rotation Amount Calculating Circuit 44 |

| Phase Rotating Circuit 45 | Difference Calculation Processing Circuit 46 | Interference Phase Calculating Circuit 49 |

# FIG. 20

Phase Difference $\Delta\varphi_{C1}(x,z_0),\Delta\varphi_{C2}(x,z_0)$

13

Image Processing Unit

31

Rotation Amount Calculating Unit

Rotation Amount $\exp[j\cdot\Delta\varphi_{C1}(x,z_0)]$,
$\exp[j\cdot\Delta\varphi_{C2}(x,z_0)]$

2 — Radar Image

Phase Rotating Unit — 33

Difference Calculation Processing Unit — 34

Difference Calculating Unit — 32

Difference $\Delta S_{C1}(pixel,line)$,
$\Delta S_{C2}(pixel,line)$

Interference Phase Calculating Unit — 37

Interference Phase $\Delta\gamma_{C1,C2}(pixel,line)$

Position Estimating Unit — 38

x

Height Information

# FIG. 21

```
        ⌐41            ⌐42              ⌐43               ⌐44
┌─────────────┐  ┌─────────────┐  ┌─────────────────┐  ┌─────────────────┐
│ Phase Shift │  │    Phase    │  │ Phase Difference│  │ Rotation Amount │
│  Component  │  │ Calculating │  │   Calculating   │  │   Calculating   │
│Calculating Circuit│ │   Circuit   │  │     Circuit     │  │     Circuit     │
└─────────────┘  └─────────────┘  └─────────────────┘  └─────────────────┘
```

```
              ⌐45            ⌐46               ⌐49              ⌐50
     ┌───────────────┐  ┌──────────────┐  ┌─────────────────────┐  ┌──────────────┐
     │ Phase Rotating│  │  Difference  │  │  Interference Phase │  │   Position   │
     │    Circuit    │  │  Calculation │  │ Calculating Circuit │  │  Estimating  │
     │               │  │Processing Circuit│ │                   │  │    Circuit   │
     └───────────────┘  └──────────────┘  └─────────────────────┘  └──────────────┘
```

**EP 3 757 609 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **D. L. BICKEL**. A null-steering viewpoint of interferometric SAR. *IGARSS2000*
- **CRISTIAN ROSSI et al.** High-Resolution InSAR Building Layovers Detection and Exploitation. *IEEE Transactions on Geoscience and Remote Sensing*, 01 December 2015, vol. 53 (12), ISSN 0196-2892, 6457-6468
- **FRANCESCO DE ZAN et al.** Observations and discussions of TanDEM-X interferogram spectra over rain forest. *IEEE International Geoscience and Remote Sensing Symposium*, 26 July 2012, ISSN 2153-6996, 5554-5557, https://elib.dlr.de/75615/1/-Forest_spectra.pdf
- **GIOSUÈ ANDREY GIARDINO et al.** An approach for improving building height estimation from interferometric SAR data. *IEEE International Geoscience and Remote Sensing Symposium*, 21 July 2013, ISSN 2153-6996
- **CLÉMENCE DUBOIS et al.** Building detection and building parameter retrieval in InSAR phase images. *ISPRS Journal of Photogrammetry and Remote Sensing*, 04 March 2016, vol. 114, ISSN 0924-2716, 228-241
- **JUN ZHU et al.** High-Rise Building Layover Exploitation with Non-Local Frequency Estimation in SAR Interferograms. *Remote Sensing*, 10 June 2017, vol. 9 (6), 579